# EUROPEAN PATENT APPLICATION

(11) **EP 4 434 763 A1**
(43) Date of publication of application: **25.09.2024**
(21) Application number: 22895294.1
(22) Date of filing: 13.10.2022
(51) Int. Cl.: B60C 1/00, C09J 11/06, C09J 11/08, D02G 3/48, C09J 109/00, C09J 129/04, C09J 133/26, C09J 197/00, D06M 13/395, D06M 15/03, D06M 15/285, D06M 15/333, D06M 15/61, D06M 15/65, D06M 15/693, B60C 9/00

(54) **ADHESIVE COMPOSITION, ORGANIC FIBROUS MATERIAL, RUBBER ARTICLE, ORGANIC FIBER/RUBBER COMPOSITE, AND TIRE**

(30) Priority: 17.11.2021 JP 2021187404
(71) Applicant: BRIDGESTONE CORPORATION, Chuo-ku Tokyo 104-8340 (JP)
(72) Inventor: NAKAMURA Masaaki, Tokyo 104-8340 (JP)
(74) Representative: Marks & Clerk LLP
(86) International application number: PCT/JP2022/038273
(87) International publication number: WO 2023/090008

(57) **Abstract**

Provided is to an adhesive composition that can ensure desired adhesiveness without using resorcin and does not impair workability in use. The adhesive composition contains (A) a rubber latex having unsaturated diene, and (B) a polyvalent metal salt, and further contains at least one component selected from the group consisting of (C) an aqueous component having a plurality of phenolic hydroxy groups in molecule, (D) a water-soluble component containing an amide bond structure, (E) an amine compound, and (F) polyvinyl alcohol.

## Description

### TECHNICAL FIELD

This disclosure relates to an adhesive composition, an organic fiber material, a rubber article, an organic fiber-rubber composite, and a tire.

### BACKGROUND

To reinforce a rubber article such as a tire, organic fibers such as tire cords made of nylon fibers, polyester fibers and the like are conventionally adhered to a rubber composition such as a rubber composition for tires to form an organic fiber-rubber composite. A method of coating organic fibers with an adhesive composition, embedding them in a rubber composition, and vulcanizing them together with the rubber composition has been widely used for the adhesion.

In the process of coating the organic fiber with the adhesive composition, a solvent is generally used to adjust the viscosity of the adhesive composition, and it is preferable to use water, which has little environmental load, as the solvent because the solvent evaporates in the process. Further, when coating the organic fiber with the adhesive composition by immersion, it is necessary to reduce the viscosity of the adhesive composition to a low viscosity so that the adhesive composition can be applied by immersion.

Components contained in an aqueous adhesive composition with water-based properties, which is water-soluble or water-dispersible, are generally required to have a polar molecular structure. On the other hand, the polarity of a polymer material such as rubber or organic fiber as an adherend is low, and if the difference between the polarity of the surface of the rubber or organic fiber or the like and the polarity of the components contained in the adhesive composition is large, it is difficult to adhere one to the other. Therefore, although the components contained in the aqueous adhesive composition must have polarity due to their water-based properties, the polarity should be controlled so that the adhesiveness will not be deteriorated due to the difference with the polarity of the adherend, so that the aqueous adhesive composition can be used as an adhesive composition for rubber articles. Therefore, an aqueous adhesive composition having functions that simultaneously solve the contradictions is suitably used.

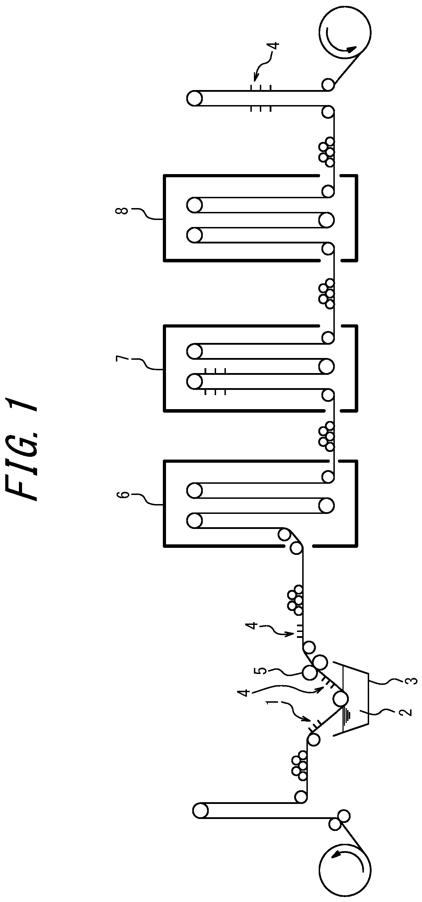

Regarding the process of coating the organic fiber with the adhesive composition, an example of the process of immersing an organic fiber cord such as a tire cord in an adhesive composition will be described with reference to FIG. 1.

An organic fiber cord 1 is unwound from an unwinding roll, conveyed by a roll, and runs into an immersion bathtub (dipping tub) 3 containing an adhesive composition 2, and the organic fiber cord 1 is immersed in the adhesive composition 2. An organic fiber cord 4 coated with the adhesive composition 2 is withdrawn from the immersion bathtub 3, and drawing rolls 5 remove the excess adhesive composition 2. Next, the organic fiber cord 4 coated with the adhesive composition 2 is further conveyed by rolls and subjected to drying in a drying zone 6, heat curing of the resin with tension applied to stretch the cord in a hot zone 7, heat curing of the resin with the tension accurately adjusted and normalized so as to achieve desired high elongation physical properties in a normalizing zone 8, and air-cooling outside the zones, and then is wound up by a winding roll. In this way, the organic fiber is coated with the adhesive composition.

Conventionally, a RFL (resorcin-formaldehyde-latex) adhesive composition obtained by aging a mixed solution containing resorcin, formaldehyde and rubber latex, or an adhesive composition obtained by mixing a specific adhesion promoter with the RFL adhesive composition has been used as the adhesive composition (see US 2128229 Specification (PTL 1), JP 2005-263887 A (PTL 2), JP 2006-37251 A (PTL 3), and JP H09-12997 A (PTL 4)).

As is well known, in the rubber industry, it has been found that an adhesive composition containing a water-dispersible rubber latex component, and an aqueous phenolic resin obtained by mixing and aging water-soluble resorcin and formaldehyde (PTL 1) has a function of achieving both adhesion to rubber as an adherend, and adhesion to the surface of a base material with low polarity such as an organic fiber, and the adhesive composition is widely used in the world. For the adhesion by the RFL adhesive composition, the rubber latex component adheres to the adherend rubber side by co-vulcanization, and the phenolic resin component that is a condensate of resorcin and formaldehyde and has adhesiveness to an organic fiber base material adheres to the adherend base material side.

The reason why resorcin is preferably used is as follows. Resorcin provides a phenolic condensed resin which is a resin-type one having high adhesiveness to an adherend, and at the same time, it can provide a resin component having high adhesiveness to the organic fiber base material side because a polar functional group introduced into the phenol ring to obtain water solubility is a hydroxyl group that has relatively low polarity and hardly causes steric hindrance.

The RFL adhesive composition is obtained by mixing and aging resorcin, formaldehyde, and rubber latex using rosin acid or the like as an emulsifier for polymerization, in the presence of a basic composition. It is presumed that, by this process, the water-soluble resorcin and the formaldehyde condense in a resol-type condensation reaction in the presence of the base (see PTL 2), while addition condensation occurring between the rosin acid on the latex surface and a methylol group at the terminal of resol-type phenol-formaldehyde addition condensation product (see Koichi Hakata, Network Polymer, Vol. 31, No. 5, p.252, (2010) (NPL 1)).

This aging causes the latex to cross-link with the resol-type resorcin-formaldehyde condensate via the rosin acid to enhance the adhesion, and the latex is composited with the aqueous resin to form an encapsulated protective colloid. In the treatment of the adhesive composition by the device as illustrated in FIG. 1, the rubber stickiness of the latex is suppressed, so that stain due to the adhesion of the adhesive composition to the device is reduced.

Further, an aqueous, that is, water-dispersible or water-soluble, adhesion promoter has been used as an adhesion promoter to be added to the RFL adhesive composition so that the aqueous adhesive composition improves the adhesion to the surface of a base material with low polarity such as an organic fiber cord.

(Blocked) isocyanate such as methylene diphenyl diisocyanate with a particle size of 0.01 µm to 0.50 µm (see PTL 3), and water-dispersed particles of water-insoluble phenolic/novolak-type resin such as cresol novolak-type polyfunctional epoxy resin (see PTL 4) and the like have been used as the water-dispersible adhesion promoter.

Further, a sodium hydroxide solution of novolak-type condensate obtained by novolak reaction of resorcin and formaldehyde (see WO 97/013818 A1 (PTL 5)), a phenolic resin that dissolves in water in the presence of basic substances such as ammonium solutions of novolak-type condensates of chlorophenols and formaldehyde, an aqueous urethane compound having a (thermal dissociative blocked) isocyanate group and a self-soluble group (see JP 2011-241402 A (PTL 6)) have been proposed as the adhesion promoter containing a water-soluble group.

In recent years, however, it has been required to reduce the use of resorcin, which has been used as a water-soluble component in the RFL adhesive composition, from the viewpoint of lowering the environmental load.

To respond to the requirement, various adhesive compositions that uses resorcin-free polyphenols and uses water as a solvent have been studied and proposed.

For example, an adhesive composition containing rubber latex and lignin resin (see WO 2018/003572 A1 (PTL 7)), and an aqueous adhesive composition based on rubber latex and polyphenol such as flavonoid and aromatic polyaldehyde (see WO 2013/017421 A1 (PTL 8) and JP 2016-528337 A (PTL 9)) are known as adhesive compositions containing no resorcin or formaldehyde.

Further, as an adhesive composition containing no resorcin or formaldehyde, JP 4810823 B (PTL 10) describes an aqueous adhesive composition containing a polyacrylamide-based water-soluble resin with a branched structure, and at least one kind of aqueous base polymer selected from synthetic resin-based emulsion and rubber-based latex.

### CITATION LIST

### Patent Literature

PTL 1: US 2128229 Specification
PTL 2: JP 2005-263887 A
PTL 3: JP 2006-37251 A
PTL 4: JP H09-12997 A
PTL 5: WO 97/013818 A1
PTL 6: JP 2011-241402 A
PTL 7: WO 2018/003572 A1
PTL 8: WO 2013/017421 A1
PTL 9: JP 2016-528337 A
PTL 10: JP 4810823 B

### Non-patent Literature

NPL 1: Koichi Hakata, Network Polymer, Vol. 31, No. 5, p.252, (2010)

### SUMMARY

### (Technical Problem)

However, when the above-described resorcin-free adhesive composition for organic fiber cords is used, the stickiness of rubber latex, which is measured as the mechanical stability of the adhesive liquid under shear strain, increases. As a result, in the process of coating the organic fiber cord 1 with the adhesive composition 2 and drying and heat curing as illustrated in FIG. 1, for example, much of the adhesive composition 2 adheres to the drawing rolls 5 and rolls in the drying zone 6 and the like, causing a new problem of poor workability in the process.

Such an adhesive composition containing no resorcin or formaldehyde (the so-called "rubber cement") does not suppress the stickiness of rubber latex in the absence of coating of condensate of resorcinol and formaldehyde, so that it tends to have poor adhesiveness especially when it is adhered to the device and causes roughening of adhesive coating surface. Further, because cross-linking between a latex component and a resorcin-formaldehyde condensate cannot be achieved, there is a problem in that the adhesiveness between an organic fiber and a coated rubber composition is lower than that of a conventional RFL adhesive composition.

When producing an aqueous adhesive composition by mixing polyphenol that has been mixed with rubber latex with aromatic dialdehyde such as terephthalaldehyde or 2,5-furandicarboxaldehyde that has low solubility in water, as described in PTL 7, the aromatic dialdehyde is difficult to dissolve in water during production, resulting in unsatisfactory workability. Further, as compared with resorcin that is water-soluble even without alkali addition, the adhesive composition liquid is made water-soluble by adding alkali to phenolic groups of aromatics with low water solubility during preparation of the adhesive composition liquid. Therefore, in subsequent vulcanization adhesion with adherend rubber, the amount of base contained in the adhesive composition increases, and the vulcanization reaction of the rubber latex contained therein is generally promoted. As a result, there is a problem of adhesion deterioration caused by over-vulcanization due to heating over time.

The above-described resorcin-free adhesive composition also has a problem that the cord strength of an organic fiber cord coated with the adhesive composition is reduced.

It could thus be helpful to provide an adhesive composition that can ensure desired adhesiveness without using resorcin and does not impair workability in use, as well as an organic fiber material, a rubber article, an organic fiber-rubber composite and a tire using the adhesive composition.

### (Solution to Problem)

To solve the above problems, we have conducted extensive research on the composition of an adhesive composition. As a result, we found that, by blending a polyvalent metal salt and specified components with specified rubber latex, it is possible to obtain an adhesive composition that can ensure desired adhesiveness without using resorcin and does not impair workability in use, thereby completing the present disclosure.

Primary features of the adhesive composition, organic fiber material, rubber article, organic fiber-rubber composite, and tire of the present disclosure are as follows.
[1] An adhesive composition, comprising:
   (A) a rubber latex having unsaturated diene, and
   (B) a polyvalent metal salt, and
      further comprising at least one component selected from the group consisting of the following (C) to (F):
   (C) an aqueous component having a plurality of phenolic hydroxy groups in molecule,
   (D) a water-soluble component containing an amide bond structure,
   (E) an amine compound, and
   (F) polyvinyl alcohol.
[2] The adhesive composition according to aspect [1], further comprising at least one component selected from the group consisting of the following (G) to (H):
   (G) an epoxide compound, and
   (H) an aqueous compound having a (thermal dissociative blocked) isocyanate group.
[3] The adhesive composition according to aspect [1] or [2], wherein the (B) polyvalent metal salt is a divalent or higher metal ion salt.
[4] The adhesive composition according to any one of aspects [1] to [3], wherein the (B) polyvalent metal salt is water-soluble and is a metal salt of tetracoordinated or hexacoordinated polyvalent metal ion.
[5] The adhesive composition according to any one of aspects [1] to [4], wherein the (B) polyvalent metal salt is a metal salt comprising at least one kind of metal selected from the group consisting of iron and copper.
[6] The adhesive composition according to any one of aspects [1] to [5], wherein the (C) aqueous component having a plurality of phenolic hydroxy groups in molecule is a plant-derived component having a plurality of phenolic hydroxy groups in molecule.
[7] The adhesive composition according to aspect [6], wherein the (C) aqueous component having a plurality of phenolic hydroxy groups in molecule is polyphenol such as lignin, tannin, tannic acid, flavonoid, or a derivative thereof.
[8] The adhesive composition according to any one of aspects [1] to [5], wherein the (C) aqueous component having a plurality of phenolic hydroxy groups in molecule is an aqueous compound containing formaldehyde and aromatic hydrocarbons having a phenolic hydroxyl group in molecule.
[9] The adhesive composition according to aspect [8], wherein the (C) aqueous component having a plurality of phenolic hydroxy groups in molecule is an aqueous compound containing formaldehyde and polycyclic aromatic hydrocarbons having a phenolic hydroxyl group in molecule.
[10] The adhesive composition according to any one of aspects [1] to [9], wherein the (D) water-soluble component containing an amide bond structure is a water-soluble component containing a peptide structure, or a water-soluble compound containing an acrylamide structure.
[11] The adhesive composition according to aspect [10], wherein the (D) water-soluble component containing an amide bond structure is at least one water-soluble component selected from the group consisting of protein and polypeptide obtained by hydrolyzing protein.
[12] The adhesive composition according to aspect [11], wherein the (D) water-soluble component containing an amide bond structure is at least one kind of protein selected from the group consisting of casein and gelatin.
[13] The adhesive composition according to aspect [11], wherein the (D) water-soluble component containing an amide bond structure is polypeptide obtained by hydrolyzing protein derived from wool, milk, beans, silk, fish scales, or skin.
[14] The adhesive composition according to aspect [10], wherein the (D) water-soluble component containing an amide bond structure is an aqueous compound of polyacrylamide or a modified product thereof.
[15] The adhesive composition according to aspect [14], wherein the (D) water-soluble component containing an amide bond structure is amphoteric polyacrylamide.
[16] The adhesive composition according to any one of aspects [1] to [15], wherein the (E) amine compound is a polyfunctional amine compound having two or more primary to tertiary amino groups.
[17] The adhesive composition according to any one of aspects [1] to [16], wherein the (F) polyvinyl alcohol has a degree of saponification of 80 mol% or more.
[18] The adhesive composition according to any one of aspects [1] to [17], wherein the (F) polyvinyl alcohol is acetoacetyl group-modified polyvinyl alcohol.
[19] The adhesive composition according to any one of aspects [2] to [18], wherein the (G) epoxide compound has two or more epoxy groups in one molecule.
[20] The adhesive composition according to any one of aspects [2] to [19], wherein the (G) epoxide compound is a reaction product of polyhydric alcohol and epichlorohydrin.
[21] The adhesive composition according to any one of aspects [2] to [20], wherein the (H) aqueous compound having a (thermal dissociative blocked) isocyanate group is (H-1) a water-dispersible (thermal dissociative blocked) isocyanate compound that contains an addition product of polyisocyanate having an aromatic ring and a blocking agent having at least one active hydrogen group.
[22] The adhesive composition according to aspect [21], wherein the (H-1) water-dispersible (thermal dissociative blocked) isocyanate compound that contains an addition product of polyisocyanate having an aromatic ring and a blocking agent having at least one active hydrogen group is a block body of methylene diphenyl diisocyanate.
[23] The adhesive composition according to any one of aspects [2] to [20], wherein the (H) aqueous compound having a (thermal dissociative blocked) isocyanate group is (H-2) an aqueous urethane compound having a (thermal dissociative blocked) isocyanate group.
[24] The adhesive composition according to aspect [23], wherein the (H-2) aqueous urethane compound having a (thermal dissociative blocked) isocyanate group is a reaction product obtained by mixing (α), (β), (γ) and (δ) and reacting them, wherein
   (α) is an organic polyisocyanate compound having 3 or more and 5 or less functional groups and having a number average molecular weight of 2,000 or less,
   (β) is a compound having 2 or more and 4 or less active hydrogen groups and having a number average molecular weight of 5,000 or less,
   (γ) is a thermal dissociative blocking agent, and
   (δ) is a compound having at least one active hydrogen group and at least one anionic, cationic, or nonionic hydrophilic group, and
   (α), (β), (γ) and (δ) are mixed so that
   a mixing ratio of (α) is 40% by mass or more and 85% by mass or less,
   a mixing ratio of (β) is 5% by mass or more and 35% by mass or less,
   a mixing ratio of (γ) is 5% by mass or more and 35% by mass or less, and
   a mixing ratio of (δ) is 5% by mass or more and 35% by mass or less, with respect to the total amount of (α), (β), (γ) and (δ), and
   when a molecular weight of isocyanate group (-NCO) is 42, a composition ratio of (thermal dissociative blocked) isocyanate group in the reaction product is 0.5% by mass or more and 11% by mass or less.
[25] The adhesive composition according to aspect [23], wherein the (H-2) aqueous urethane compound having a (thermal dissociative blocked) isocyanate group is represented by the following general formula (1): 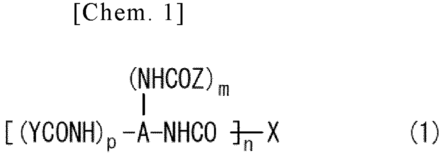 wherein
   A is a residue of an organic polyisocyanate compound from which an active hydrogen group has been eliminated,
   X is a residue of a polyol compound having 2 or more and 4 or less hydroxyl groups and having a number average molecular weight of 5,000 or less from which an active hydrogen group has been eliminated,
   Y is a residue of a thermal dissociative blocking agent from which an active hydrogen group has been eliminated,
   Z is a residue of a compound having at least one active hydrogen group and at least one salt-producing group or hydrophilic polyether chain, from which an active hydrogen group has been eliminated,
   n is an integer of 2 or more and 4 or less, and
   p + m is an integer of 2 or more and 4 or less, where m ≥ 0.25.
[26] The adhesive composition according to any one of aspects [1] to [25], comprising no resorcin.
[27] The adhesive composition according to any one of aspects [1] to [26], which is used for adhesion to rubber.
[28] The adhesive composition according to any one of aspects [1] to [26], which is used for adhesion to an organic fiber.
[29] The adhesive composition according to any one of aspects [1] to [28], which is used for adhering rubber to an organic fiber.
[30] An organic fiber material, comprising an organic fiber and an adhesive layer coating a surface of the organic fiber, wherein
   the adhesive layer is made of the adhesive composition according to any one of aspects [1] to [29].
[31] The organic fiber material according to aspect [30], wherein the organic fiber is an organic fiber cord obtained by twisting a plurality of filaments.
[32] The organic fiber material according to aspect [31], wherein the organic fiber cord is made by first twisting and second twisting, (the organic fiber cord is preferably a cord obtained by twisting a plurality of filaments, and the cord obtained by twisting a plurality of filaments has second twists and first twists), the cord obtained by twisting has a fiber thickness of 100 dtex to 5000 dtex, and the number of twists is 10 times/10 cm to 50 times/10 cm for first twists and 10 times/10 cm to 50 times/10 cm for second twists.
[33] The organic fiber material according to aspect [31] or [32], wherein the adhesive layer is 0.5% by mass to 6.0% by mass of the mass of the organic fiber cord in dry mass.
[34] The organic fiber material according to any one of aspects [30] to [33], wherein the organic fiber is made of nylon resin.
[35] A rubber article, which is reinforced by the organic fiber material according to any one of aspects [30] to [34].
[36] An organic fiber-rubber composite (especially an organic fiber cord-rubber composite), which is a composite of an organic fiber and rubber, wherein the organic fiber is coated with the adhesive composition according to any one of aspects [1] to [29].
[37] A tire, using the organic fiber-rubber composite according to aspect [36].

### (Advantageous Effect)

According to the present disclosure, it is possible to provide an adhesive composition that can ensure desired adhesiveness without using resorcin and does not impair workability in use, as well as an organic fiber material, a rubber article, an organic fiber-rubber composite, and a tire using the adhesive composition.

### BRIEF DESCRIPTION OF THE DRAWINGS

In the accompanying drawings:
FIG. 1 schematically illustrates an example of a process of coating an organic fiber cord with an adhesive composition by immersion; and
FIG. 2 schematically illustrates a cross section of an example of an organic fiber-rubber composite of the present disclosure.

### DETAILED DESCRIPTION

The following describes an adhesive composition, an organic fiber material, a rubber article, an organic fiber-rubber composite and a tire of the present disclosure in detail based on their embodiments. These descriptions are for the purpose of exemplifying the present disclosure and do not limit the present disclosure in any way.

In the present specification, the ends of a range are also included in the range unless otherwise specified.

### [Adhesive composition]

An adhesive composition of the present disclosure contains (A) a rubber latex having unsaturated diene and (B) a polyvalent metal salt, and further contains at least one component selected from the group consisting of (C) an aqueous component having a plurality of phenolic hydroxy groups in molecule, (D) a water-soluble component containing an amide bond structure, (E) an amine compound, and (F) polyvinyl alcohol.

The adhesive composition of the present disclosure with the above configuration can obtain good adhesion without using resorcin, and particularly, good adhesion between an organic fiber and a coated rubber composition can be secured. In the adhesive composition of the present disclosure, the (A) rubber latex having unsaturated diene contributes to improving the adhesiveness. Further, by using a combination of the (B) polyvalent metal salt and at least one component selected from the group consisting of (C) to (F) above, it is possible to suppress the adhesion of the adhesive composition to a roll or the like, especially in a process of coating an organic fiber with the adhesive composition and drying and heat curing, by suppressing the stickiness of rubber latex measured as the mechanical stability under shear strain of the adhesive liquid, so that the workability is good.

Therefore, according to the adhesive composition of the present disclosure, it is possible to obtain desired adhesiveness without using resorcin and also to ensure good workability in use.

Further, according to the adhesive composition of the present disclosure, it is possible to lower the environmental load because there is no need to use resorcin. Therefore, the adhesive composition of the present disclosure can be free of resorcin.

Further, the adhesive composition of the present disclosure preferably contains no formaldehyde. This further lowers the environmental load.

The adhesive composition of the present disclosure preferably further contains at least one component selected from the group consisting of (G) an epoxide compound and (H) an aqueous compound having a (thermal dissociative blocked) isocyanate group. In this case, excellent adhesiveness and mechanical stability can be realized even when formaldehyde and resorcin are not contained.

The adhesive composition of the present disclosure has high adhesiveness to rubber, and therefore it is preferably used as an adhesive composition for adhesion to rubber. Further, the adhesive composition of the present disclosure has high adhesiveness to organic fibers, and therefore it is preferably used as an adhesive composition for adhesion to an organic fiber. Furthermore, the adhesive composition of the present disclosure has high adhesiveness to both rubber and organic fibers, and therefore it is more preferably used as an adhesive composition for adhering rubber to an organic fiber. In particular, the adhesive composition of the present disclosure is useful when applied to an organic fiber cord described later.

### <(A) Rubber latex having unsaturated diene>

In the adhesive composition of the present disclosure, the (A) rubber latex having unsaturated diene may be synthetic rubber latex having unsaturated diene, natural rubber latex, or the like.

The synthesis rubber latex having unsaturated diene in the adhesive composition of the present disclosure means synthetic rubber latex containing unsaturated diene that is vulcanizable with sulfur.

In one embodiment of the present disclosure, the (A) rubber latex having unsaturated diene contained in the adhesive composition is a component for adhering an adhesive layer of the adhesive composition to a coated rubber composition that is an adherend thereof, similar to the above-described rubber cement. The (A) rubber latex having unsaturated diene is compatible with a rubber polymer contained in the coated rubber composition as an adherend, and rubber co-vulcanization adhesion is formed by co-vulcanization of unsaturated diene moieties. As a result, according to the adhesive composition of the present disclosure containing (A) rubber latex having unsaturated diene, it is possible to achieve good adhesion between, for example, an organic fiber cord and a coated rubber composition.

The (A) rubber latex having unsaturated diene is not limited, and examples thereof include synthetic rubber latex such as styrene-butadiene copolymer rubber latex, vinylpyridine-styrene-butadiene copolymer rubber latex, carboxyl group-modified styrene-butadiene copolymer rubber latex, nitrile rubber latex, and chloroprene rubber latex. These may be used alone or in combination of two or more.

Among the above, vinylpyridine-styrene-butadiene copolymer rubber latex is preferred. The reason is as follows. Vinylpyridine-styrene-butadiene copolymer rubber latex is rubber latex which has been widely used in adhesive compositions and also in articles such as tires. In the adhesive composition of the present disclosure, it provides a good bond between the adhesive layer and rubber as an adherend and has the advantage of being relatively soft and flexible, thereby achieving organic fiber cord deformation without splitting the adhesive layer.

The content (solid content) of the (A) rubber latex having unsaturated diene in the total solid content of the adhesive composition of the present disclosure is not particularly limited. It is preferably 25% by mass or more, more preferably 40% by mass or more, and still more preferably 50% by mass or more. Further, the content of the (A) rubber latex having unsaturated diene is preferably 99.5% by mass or less, more preferably 95% by mass or less, and still more preferably 90% by mass or less. When the content of the (A) rubber latex having unsaturated diene is 25% by mass or more, the compatibility between rubber polymers of the coated rubber composition and the rubber latex contained in the adhesive composition becomes more appropriate, and the adhesion state of coated rubber in the organic fiber-rubber composite improves. On the other hand, when the content of the (A) rubber latex having unsaturated diene is 99.5% by mass or less, the amount of coating component that suppresses the stickiness of latex contained as another component in the adhesive composition can be ensured at a relatively constant level or more compared to rubber cement, and the adhesive liquid can obtain mechanical stability under shear strain. In a process of coating a fiber material to be adhered with the adhesive composition, it is possible to suppress the adhesive composition from adhering to the device as illustrated in FIG. 1. Further, in this case, the problem that the surface of the coated adhesive composition roughens and the adhesiveness to coated rubber composition deteriorates hardly occurs, which improves the adhesiveness.

The (A) rubber latex having unsaturated diene can be obtained, for example, by dissolving an emulsifier such as potassium rosinate in water, then adding a mixture of monomers to the mixture, further adding an electrolyte such as sodium phosphate and peroxides and the like as a polymerization initiator, performing polymerization, and then, after reaching a predetermined conversion rate, adding a charge transfer agent, stopping the polymerization, and removing the residual monomers. Further, it is preferable to use a chain transfer agent during the polymerization.

The emulsifier is used to emulsify the mixture of monomers in the aqueous system, and it may be at least one selected from anionic surfactants such as an alkali metal salt of a fatty acid, an alkali metal salt of rosin acid, a formaldehyde-condensed sodium naphthalene sulfonate, a sulfate ester of a higher alcohol, an alkylbenzene sulfonate and an aliphatic sulfonate, or nonionic surfactants such as alkyl ester, alkyl ether, and alkylphenyl ether types of polyethylene glycol.

Among these emulsifiers, it is preferable to contain a metal salt of rosin acid, especially an alkali metal salt of rosin acid. It can be used alone, that is, in only one type, or in combination with other emulsifiers in two or more types.

The rosin acid is a mixture of resin acids with similar chemical structures, mainly composed of tricyclic diterpenes obtained from pine resin and the like. These resin acids have three ring structures, two double bonds, and one carboxyl group, and they have functional groups with high reactivity, such as the double bond portion reacting with unsaturated carboxylic acids, or esterification at the methylol end of resol phenolic resin and the carboxyl group portion.

The amount of such an emulsifier used is usually 0.1 parts by mass to 8 parts by mass, preferably 1 part by mass to 5 parts by mass, with respect to 100 parts by mass of all monomers used in latex polymerization.

Examples of the polymerization initiator includes a water-soluble initiator such as potassium persulfate, sodium persulfate and ammonium persulfate, a redox-based initiator, or an oil-soluble initiator such as benzoyl peroxide. Among the above, it is preferable to use potassium persulfate.

Examples of the chain transfer agent include monofunctional alkyl mercaptans such as n-hexyl mercaptan, t-dodecyl mercaptan, n-dodecyl mercaptan, n-octyl mercaptan, n-tetradecyl mercaptan, and t-hexyl mercaptan; bifunctional mercaptans such as 1,10-decanedithiol and ethylene glycol dithioglycolate; trifunctional mercaptans such as 1,5,10-canditrithiol and trimethylolpropane tristhioglycolate; tetrafunctional mercaptans such as pentaerythritol tetrakisthioglycolate; disulfides; halogen compounds such as carbon tetrachloride, carbon tetrabromide, and ethylene bromide; and α-methylstyrene dimer, terpinolene, α-terpinene, dipentene, and allyl alcohol. These may be used alone or in combination of two or more.

Among these chain transfer agents, alkyl mercaptan is preferable, and n-octyl mercaptan and t-dodecyl mercaptan are more preferable. Among the above, it is preferable to use t-dodecyl mercaptan.

The amount of such a chain transfer agent used is usually 0.01 parts by mass to 5 parts by mass, preferably 0.1 parts by mass to 3 parts by mass, with respect to 100 parts by mass of all monomers used in latex polymerization.

In addition to the above components, general-purpose additives such as an antioxidant like hindered phenols, a silicone-based, higher alcohol-based or mineral oil-based defoamer, a reaction terminator, and an antifreezing agent may be used for the latex, if necessary.

The components (B) to (F) of the present disclosure can be added to the latex, and in this case, the components are contained in the composition containing (A) and (B) in the adhesive composition of the present disclosure.

### <<Vinylpyridine-styrene-butadiene copolymer rubber latex>>

The vinylpyridine-styrene-butadiene copolymer rubber latex is a ternary copolymer of a vinylpyridine-based monomer, a styrene-based monomer, and a conjugated diene-based butadiene monomer, and these monomers may be further added with other copolymerizable monomers.

The vinylpyridine-based monomer includes vinylpyridine and substituted vinylpyridine in which a hydrogen atom in the vinylpyridine is substituted with a substituent. Examples of such a vinylpyridine-based monomer include 2-vinylpyridine, 3-vinylpyridine, 4-vinylpyridine, 2-methyl-5-vinylpyridine, and 5-ethyl-2-vinylpyridine, among which 2-vinylpyridine is preferable. These vinylpyridine-based monomers may be used alone or in combination of two or more.

The styrene-based monomer includes styrene and substituted styrene in which a hydrogen atom in the styrene is substituted with a substituent. Examples of the styrene-based monomer include styrene, α-methylstyrene, 2-methylstyrene, 3-methylstyrene, 4-methylstyrene, 2,4-diinopropylstyrene, 2,4-dimethylstyrene, 4-t-butylstyrene, and hydroxymethylstyrene, among which styrene is preferable. These styrene-based monomers may be used alone or in combination of two or more.

Examples of the conjugated diene-based butadiene monomer include aliphatic conjugated butadiene compounds such as 1,3-butadiene and 2-methyl-1,3-butadiene, among which 1,3-butadiene is preferable. These conjugated diene-based butadiene monomers may be used alone or in combination of two or more.

The vinylpyridine-styrene-butadiene copolymer rubber latex can be synthesized with a known method, and specific examples thereof include a method described in JP H09-78045 A according to studies by the inventors of the present disclosure. With these methods, it is possible to have various compositions and intra-particle structures such as copolymers with uniform or different composition ratios within one particle of the vinylpyridine-styrene-butadiene copolymer rubber latex.

The vinylpyridine-styrene-butadiene copolymer rubber latex may be a commercially available product of a copolymer with a uniform composition monomer mixture ratio in one particle, and examples thereof include Nipol 2518 manufactured by Zeon Corporation, PYRATEX manufactured by NIPPON A&L INC. Further, examples of a commercially available product of a copolymer with different composition monomer mixture ratios in one particle include V0658 manufactured by JSR Corporation. All of these can be used as the (A) rubber latex having unsaturated diene of the adhesive composition of the present disclosure.

In the vinylpyridine-styrene-butadiene copolymer rubber latex, the monomer ratio of vinylpyridine: styrene: butadiene is not particularly limited. However, among the copolymers constituting the vinylpyridine-styrene-butadiene copolymer particles, it is preferable to include a copolymer obtained by polymerizing a monomer mixture consisting of 5% by mass to 20% by mass of vinylpyridine, 10% by mass to 40% by mass of styrene, and 45% by mass to 75% by mass of butadiene. The reason is as follows. When the content of vinylpyridine is 5% by mass or more, there is an appropriate amount of pyridine moiety that has a vulcanization promoting effect in the rubber component, and the adhesiveness of the entire adhesive layer further improves as the degree of cross-linking is increased by sulfur. When the content of vinylpyridine is 20% by mass or less, it is possible to obtain a hard adhesive without the degree of cross-linking of the rubber being overvulcanized. When the content of styrene is 10% by mass or more, the strength of the latex particles and the adhesive layer is sufficient, and the adhesiveness is further improved. When the content of styrene is 40% by mass or less, the adhesiveness is ensured with appropriate co-vulcanization properties between the adhesive layer and the rubber as an adherend. When the content of butadiene is 45% by mass or more, it is possible to form crosslinks more sufficiently. When the content of butadiene is 75% by mass or less, durability in terms of volume and modulus change can be ensured satisfactorily with moderate cross-linking. The composition ratio of the monomer mixture of vinylpyridine: styrene: butadiene may be preferably, for example, 15: 15: 70.

In the present disclosure, the (A) rubber latex having unsaturated diene may be natural rubber latex, in addition to synthetic rubber latex having unsaturated diene. The natural rubber latex is not particularly limited, and examples thereof include field latex, ammonia-treated latex, centrifuged concentrated latex, deproteinized latex treated with surfactants and enzymes, and combinations thereof. Among the above, it is preferable to use field latex.

### <(B) Polyvalent metal salt>

The (B) polyvalent metal salt used in the adhesive composition of the present disclosure is not particularly limited, and any divalent or higher metal ion salt may be used. When the (B) polyvalent metal salt is a divalent or higher metal ion salt, the adhesive strength of the adhesive composition to organic fibers can be improved.

The (B) polyvalent metal salt is preferably a water-soluble metal salt, and particularly preferably a metal salt of tetracoordinated or hexacoordinated polyvalent metal ion. When the (B) polyvalent metal salt is a water-soluble metal salt of tetracoordinated or hexacoordinated polyvalent metal ion, the adhesive strength of the adhesive composition to organic fibers can be further improved.

The (B) polyvalent metal salt may be used alone or in combination of two or more.

The (B) polyvalent metal salt is not particularly limited, but it is preferably a metal salt that can be dissolved in a solvent of water as a polyvalent metal ion (including complex ion). The reason is as follows. When the metal ion is polyvalent rather than monovalent, it can interact with a plurality of components, ionic cross-linking or coordination cross-linking becomes possible among adherend fiber surfaces, interacting moieties of components of the adhesive composition, sulfur activated species migrating from adherend rubber during vulcanization, and the like, and an effect of increasing holding power or cohesive force with components can be expected.

Particularly preferred polyvalent metal ions are tetracoordinated or hexacoordinated polyvalent metal ions. Examples of these metal salts include mordants used as dyeing chemicals for fibers. Preferable examples thereof include metal salts of aluminum, iron, chromium, copper, tin, nickel, titanium, and the like, among which metal salts containing iron and/or copper are more preferred. When the (B) polyvalent metal salt is a metal salt containing at least one kind of metal selected from the group consisting of iron and copper, the adhesive strength of the adhesive composition to organic fibers can be extremely high.

The metal salt is not particularly limited, and specific examples thereof include natural mordants such as iron chloride, tin chloride, alum, copper sulfate, copper acetate, copper oxalate, copper gluconate, aluminum acetate, or mordants made with iron or lye containing these polyvalent metal ions. Among the above, it is particularly preferably to contain a metal salt of copper ion or iron ion. In a preferred embodiment of the present disclosure, copper gluconate that is used as a food additive for copper supplementation or the like, or iron chloride is used.

The (B) polyvalent metal salt may be dissolved in water by stirring and added to the adhesive composition as an aqueous solution of about 0.01% by mass to 5% by mass. Within this range, it is possible to improve the holding power on the organic fiber surface like a mordant in organic fiber dyeing and to further improve the adhesive strength on organic fibers.

Further, when the (B) polyvalent metal salt, and at least one component selected from the group consisting of (C) an aqueous component having a plurality of phenolic hydroxy groups in molecule, (D) a water-soluble component containing an amide bond structure, (E) an amine compound, and (F) polyvinyl alcohol are contained, charge transfer occurs between anionic or amine groups contained in the compounds of (C) to (F) and cationic metal ions of the (B) polyvalent metal salt to cause interactions. As a result, cohesive fracture resistance inside the adhesive composition layer is further improved, and the adhesive strength on organic fibers can be further improved.

The content (solid content) of the (B) polyvalent metal salt in the total solid content of the adhesive composition of the present disclosure is not particularly limited, but it is preferably 0.01% by mass or more and more preferably 0.05% by mass or more. The content of the (B) polyvalent metal salt is preferably 3% by mass or less and more preferably 1.5% by mass or less. The reason is as follows. When the content of the (B) polyvalent metal salt is 0.05% by mass or more, the adhesiveness between an organic fiber and a coated rubber composition can be further improved. When the content of the (B) polyvalent metal salt is 3% by mass or less, thickening due to aggregation effect of the adhesive composition by the polyvalent metal salt can be suppressed. As a result, deterioration in adhesion due to over-vulcanization under heat is suppressed without excessive amounts of alkaline ions, and this is also preferable in terms of environment.

### <(C) Aqueous component having a plurality of phenolic hydroxy groups in molecule>

One embodiment of the adhesive composition of the present disclosure contains (A) rubber latex having unsaturated diene, (B) a polyvalent metal salt, and (C) an aqueous component having a plurality of phenolic hydroxy groups in molecule.

The (C) aqueous component having a plurality of phenolic hydroxy groups in molecule is preferably (C-1) a plant-derived aqueous component having a plurality of phenolic hydroxy groups in molecule, or (C-2) an aqueous compound having a structure in which aromatics are bonded with methylene. This case provides better adhesion between an organic fiber and a coated rubber composition when the adhesive composition is used on organic fibers.

The (C-1) plant-derived aqueous component having a plurality of phenolic hydroxy groups in molecule is preferably a plant-derived polymer having a plurality of phenolic hydroxy groups in molecule, and a preferred example is water-soluble polyphenol. Specific examples thereof include polyphenols such as lignin, tannin, tannic acid, flavonoid, and derivatives thereof. This case provides even better adhesion between an organic fiber and a coated rubber composition when the adhesive composition is used on organic fibers.

The (C) aqueous component having a plurality of phenolic hydroxy groups in molecule has effects as a phenolic antioxidant because it has a plurality of phenolic hydroxy groups in molecule, and it can suppress oxidative deterioration reactions at saturated diene moiety of the (A) rubber latex having unsaturated diene contained in the adhesive composition. As a result, it is possible to prevent reduction over time of unsaturated diene on the adhesive composition surface due to radical oxidation reactions caused by heat or light. Accordingly, when the (C) aqueous component having a plurality of phenolic hydroxy groups in molecule is used in the adhesive composition, the adhesion between an organic fiber and a coated rubber composition hardly deteriorates over time, and the adhesiveness is good.

Although studies have been conducted for a long time to separate polyphenols such as lignin and tannin that are components in wood and bark and react them with formaldehyde to produce adhesives (for example, see JP H07-53858 A), there is little knowledge of producing aqueous adhesive compositions containing no resorcin, especially aqueous adhesive compositions containing rubber latex having unsaturated diene.

The (C) aqueous component having a plurality of phenolic hydroxy groups in molecule is preferably lignin or a derivative thereof. Lignin, along with polysaccharides such as cellulose, is a main component of plant cell walls. Lignin includes, for example, functional groups such as a hydroxyl group, a methoxy group, a carbonyl group and a carboxyl group, and particularly, the phenolic hydroxy group can interact with a cationic substance because it is highly reactive.

Lignin is a polymer with a structure based on phenylpropane, but its molecular structure has not yet been completely elucidated because lignin has a variety of molecular structures and it is a huge biopolymer with a three-dimensional network structure.

Because natural lignin forms a strong composite material with polysaccharides such as cellulose in plant cell walls, it is extremely difficult to isolate natural lignin without modifying its chemical structure. Various industrial separation methods are used to extract lignin from materials such as wood. Examples of the lignin obtained after separation include sulfonic acid lignin, kraft lignin, soda lignin, and steam-blasted lignin. Among these industrially handled lignin, lignin obtained on a large scale from pulp waste liquid of chemical pulping in the paper pulp manufacturing process, that is, lignosulfonates or kraft lignin, is a well-known material from the viewpoint of availability and economy.

Examples of other lignins include lignin modified by hydroxymethylation, epoxidation, denitrification, acylation or hydroxylation, diethanolamine-modified lignin, enzyme-modified lignin, laccase-modified lignin, urea-modified lignin, lignosulfonate, alkali cellulose-method lignin, alkali granite-method lignin, and polyethylene glycol-added lignin.

The kraft lignin is lignin obtained with a chemical pulping method (high-temperature and high-pressure reaction) called kraft cooking method that is a high-temperature and high-pressure reaction, where wood chips of broadleaf trees, conifers, miscellaneous trees, bamboo, kenaf, bagasse and the like as raw material wood are put into a digester together with a cooking solution made of sodium hydroxide/sodium sulfide and the like. Acid and/or carbon dioxide is added to the kraft waste liquid obtained after kraft cooking to precipitate dissolved lignin modified products, and then the obtained precipitate is dehydrated and washed to obtain the kraft lignin. Further, the precipitate after dehydration and washing can be subjected to refining where an organic solvent such as alcohol or acetone is added to dissolve the precipitate to separate insoluble impurities and then drying is performed, or to modification where various functional groups are introduced as necessary. The kraft lignin may be a commercially available product, among which the reagent "Lignin, alkali, kraft" (CAS Number: 8068-05-1) manufactured by Sigma-Aldrich Co. LLC is preferred.

In the chemical pulping method of sulfite cooking method in which wood chips are reacted with a cooking solution of sulfurous acid and/or sulfites at high temperature and high pressure, the sulfonic acid lignin is lignin sulfonic acid and its salts obtained from the waste liquid and the like eluted from sulfite pulp, and particularly preferred examples thereof include calcium lignin sulfonate, sodium lignin sulfonate, potassium lignin sulfonate, and magnesium lignin sulfonate. Among the above, sodium lignin sulfonate and the like are preferred. These sulfonic acid lignins are available as commercial products. For example, a lignin sulfonate or a modified lignin sulfonate may be the SAN X series manufactured by Nippon Paper Industries Co., Ltd.

Examples of a high value-added lignin sulfonate include a high-purity product, and a partially de(low) sulfonated lignin sulfonate whose degree of sulfonation has been reduced by heating a lignin sulfonate in an alkaline aqueous solution using sodium hydroxide or ammonia in the presence of an oxidizing agent such as oxygen (for example, see JP 2016-135834 A). A high-purity lignin sulfonate or modified lignin sulfonate may be the PEARLLEX series manufactured by Nippon Paper Industries Co., and a partially desulfonated lignin sulfonic acid may be the VANILLEX series manufactured by Nippon Paper Industries Co. Among these, the reagent "Lignin (alkali)" (CAS Number: 8061-51-6, solid powder) manufactured by Tokyo Chemical Industry Co., Ltd. (TCI) that is a partially de(low) sulfonated lignin sulfonate with a reduced degree of sulfonation is preferred.

The tannin is a group of polyphenols that are present in a wide range of plants, not only in woody trees, but also in fruits, leaves and seeds, such as grapes, persimmons, berries, cloves, legumes, medicinal herbs, tea leaves and cocoa beans. Tannin molecules generally contain a large number of hydroxyl groups and often also carboxyl groups and tend to form strong complexes and composites with a wide range of macromolecules.

The tannin includes tannic acid, proanthocyanidin, flavonoid, gallic acid ester, catechin, and the like, and it also includes salts thereof and derivatives thereof such as modified products. The flavonoid is ubiquitous in the leaves, stems, and barks of plants and is a substance generally called tannin that includes hydrolyzable tannin and condensed tannin. The identification of these tannins is as follows. When it is boiled in dilute hydrochloric acid, condensed tannin forms insoluble precipitates, and hydrolyzable tannin hydrolyzes to form water-soluble substances.

The tannin, both hydrolyzable tannin and condensed tannin, is water-soluble and can be obtained by extraction from plant materials such as wood, bark, leaves, fruits, pods, and insect galls by hot water extraction or other methods. For example, hydrolyzable tannin can be obtained from the wood of chestnuts and nuts, the bark of oak, tea leaves, nutgalls, and gallnuts, and condensed tannin can be obtained from the wood of quebracho, the bark of mimosa, and the seeds of persimmon and buckwheat. Among the above, the hydrolyzable tannin is preferably the reagent "Tannic acid" (CAS Number: 1401-55-4-6, solid powder) manufactured by NACALAI TESQUE, INC., which is a tannic acid obtained from nutgalls and the like, and the condensed tannin is preferably the product "Mimosa" (solid powder) manufactured by Kawamura Corporation, which is obtained from the bark of mimosa.

The (C) aqueous component having a plurality of phenolic hydroxy groups in molecule is preferably (i) an aqueous compound containing formaldehyde and aromatic hydrocarbons having phenolic hydroxyl groups in molecule. This case provides better adhesion between an organic fiber and a coated rubber composition when the adhesive composition is used on organic fibers.

Further, the (C) aqueous component having a plurality of phenolic hydroxy groups in molecule is more preferably an aqueous compound containing formaldehyde and polycyclic aromatic hydrocarbons having phenolic hydroxyl groups in molecule. Specific examples thereof include salts of β-naphthalenesulfonic acid formaldehyde condensates. This case provides better adhesion between an organic fiber and a coated rubber composition when the adhesive composition is used on organic fibers.

The (C) aqueous component having a plurality of phenolic hydroxy groups in molecule can further improve the adhesive strength on organic fibers as follows by combining with the (A) rubber latex having unsaturated diene and the (B) polyvalent metal salt in one embodiment of the adhesive composition of the present disclosure.

First, the (C) aqueous component having a plurality of phenolic hydroxy groups in molecule is easily fixed on the surface of the (A) rubber latex having unsaturated diene by adding the (B) polyvalent metal salt. The reason is as follows. The (A) rubber latex having unsaturated diene is generally synthesized using an anionic emulsifier, and the cationic polyvalent metal salt can interpose between a functional group of the anionic emulsifier on the surface of the (A) rubber latex having unsaturated diene and the phenolic hydroxy groups of the (C) aqueous component having a plurality of phenolic hydroxy groups in molecule to cause charge transfer interactions.

Next, the (C) aqueous component having a plurality of phenolic hydroxy groups in molecule is easily fixed on the surface of adhered organic fibers such as nylon by adding the (B) polyvalent metal salt. This is because the cationic metal salt can interpose between anionic groups generated by oxidative decomposition of the polymer in the adhered organic fibers and the phenolic hydroxyl groups of the (C) aqueous component having a plurality of phenolic hydroxy groups in molecule to cause charge transfer interactions. These are known as metal mordanting, in which the aqueous component having phenolic hydroxy groups that can form complex salts with metal ions can produce and fix water-insoluble metal complex salts on organic fibers.

In such metal mordanting, the (C) aqueous component having a plurality of phenolic hydroxy groups in molecule forms a complex salt with the tetracoordinated or hexacoordinated metal, specifically metal such as aluminum, iron, chromium, copper, tin, and nickel, of the (B) polyvalent metal salt, and is easily fixed on the organic fiber surface. Further, in such metal mordanting, the (C) aqueous component having a plurality of phenolic hydroxy groups in molecule tends to form a complex salt when it has a structure of a dye in metal mordanting having tannins or sulfonic acid groups, which is preferable.

In particular, when the (B) polyvalent metal salt is a metal salt containing iron or copper, the (C) aqueous component having phenolic hydroxy groups preferably has a plurality of phenolic hydroxy groups. The reason is as follows. Metal that tends to be an oxidizing catalyst such as iron or copper forms a quinone structure in some of the phenolic hydroxyl groups. When it is fixed to organic fibers, the reduced form (leuco form) of the dyeing solution becomes a quinone form on the fiber like vat dyes, and the ability to fix itself to organic fibers is further improved. It is known that generally, in plant-derived polyphenol, the aromatic ring structure and multiple phenolic hydroxy groups are partially oxidized by copper peroxidase and the like to form a quinone structure, and then cross-linked to form a higher-order structure. The plant-derived polyphenol is preferred because some of the multiple phenolic hydroxy groups can form a quinone structure. It is more preferable to use water-soluble polyphenols or processed products of ligninsulfonic acid obtained by processing them.

When the ligninsulfonic acid is a partially desulfonated ligninsulfonic acid, it can be preferably used because it has good dispersibility on the organic fiber surface when fixing on the adhered organic fiber (see JP 2002-146028 A).

The content (solid content) of the (C) aqueous component having a plurality of phenolic hydroxy groups in molecule in the total solid content of the adhesive composition is not particularly limited, but it is preferably 1% by mass or more, more preferably 3% by mass or more, and still more preferably 5% by mass or more. Further, the content of the (C) aqueous component having a plurality of phenolic hydroxy groups in molecule is preferably 60% by mass or less, more preferably 30% by mass or less, and still more preferably 25% by mass or less. This is because, when the content of the (C) aqueous component having a plurality of phenolic hydroxy groups in molecule is 1% by mass or more, the adhesion between an organic fiber and a coated rubber composition is improved. Further, when the content of the (C) aqueous component having a plurality of phenolic hydroxy groups in molecule is 50% by mass or less, it is possible to relatively secure a certain amount or more of other components such as rubber latex blended in the adhesive composition, which improves the adhesiveness to rubber as an adherend.

### <(D) Water-soluble component containing an amide bond structure>

One embodiment of the adhesive composition of the present disclosure contains (A) rubber latex having unsaturated diene, (B) a polyvalent metal salt, and (D) a water-soluble component containing an amide bond structure.

The (D) water-soluble component containing an amide bond structure is preferably (D-1) a water-soluble component containing a peptide structure, or (D-2) a water-soluble compound containing an acrylamide structure. This case provides better adhesion between an organic fiber and a coated rubber composition when the adhesive composition is used on organic fibers.

The (D-1) water-soluble component containing a peptide structure is preferably at least one water-soluble component selected from the group consisting of proteins such as polylysine, casein and gelatin, and polypeptides obtained by hydrolyzing proteins (derived from wool, milk, beans, silk, fish scales, skin, etc.). When the (D) water-soluble component containing an amide bond structure is at least one water-soluble component selected from the group consisting of proteins, and polypeptides obtained by hydrolyzing proteins, even better adhesion can be obtained between an organic fiber and a coated rubber composition when the adhesive composition is used on organic fibers. Further, when the (D) water-soluble component containing an amide bond structure is at least one kind of protein selected from the group consisting of casein and gelatin, or polypeptide obtained by hydrolyzing proteins derived from wool, milk, beans, silk, fish scales and skin, extremely good adhesion can be obtained between an organic fiber and a coated rubber composition when the adhesive composition is used on organic fibers.

The (D-2) water-soluble compound containing an acrylamide structure is preferably an aqueous compound of polyacrylamide or a modified product thereof. As the aqueous compound of polyacrylamide or a modified product thereof, an amphoteric polyacrylamide can be suitably used. When the (D) water-soluble component containing an amide bond structure is an aqueous compound of polyacrylamide or a modified product thereof, even better adhesion can be obtained between an organic fiber and a coated rubber composition when the adhesive composition is used on organic fibers. When the (D) water-soluble component containing an amide bond structure is an amphoteric polyacrylamide, extremely good adhesion can be obtained between an organic fiber and a coated rubber composition when the adhesive composition is used on organic fibers.

The (D) water-soluble component containing an amide bond structure is easily fixed on the surface of adhered organic fibers such as nylon by adding the (B) polyvalent metal salt. This is due to charge transfer interactions between anionic groups generated by oxidative decomposition of the polymer in the adhered organic fibers and cationic metal salts interacting with the (D) water-soluble component containing an amide bond structure.

Regarding the interactions between the tetracoordinated or hexacoordinated polyvalent metal salt and the (D) water-soluble component containing an amide bond structure, when the (D) water-soluble component containing an amide bond structure is (D-1) a water-soluble component containing a peptide structure, especially when the (D) component is at least one water-soluble component selected from the group consisting of proteins such as polylysine, casein and gelatin, and polypeptides obtained by hydrolyzing proteins (derived from wool, milk, beans, silk, fish scales, skin, etc.), for example, moieties containing nitrogen, sulfur and oxygen of proteins, such as histidine and tyrosine found in copper proteins, become ligands and interact with metal ions by coordinating with them.

Further, the (D) water-soluble component containing an amide bond structure can interact with the polyvalent metal salt through a copolymerized anionic functional group or a carboxyl group resulting from polyacrylamide bond decomposition, similar to the effects of polyacrylamide and polyvalent metal on fiber fixing in the papermaking process.

The content (solid content) of the (D) water-soluble component containing an amide bond structure in the total solid content of the adhesive composition is not particularly limited, but it is preferably 0.1% by mass or more and preferably 25% by mass or less. It is more preferably 0.2% by mass or more and 15% by mass or less and still more preferably 0.4% by mass or more and 8% by mass or less. When the content of the (D) water-soluble component containing an amide bond structure is 0.1% by mass or more, its function as an emulsifier can reduce rubber latex stickiness caused by coating of the (A) rubber latex having unsaturated diene. The effects become stable at 0.2% by mass or more.

On the other hand, when the content of the (D) water-soluble component containing an amide bond structure exceeds 25% by mass, the amount of (D) component contained in the adhesive composition is too large. This is because, when the amount of resin filling the voids between rubber latex particles is 25% or more, the coating of (D) amide that is fixed to the rubber latex increases, and the amount of rubber latex exposed on the surface of the adhesive layer during vulcanization decreases. Further, when the content of the (D) water-soluble component containing an amide bond structure is 15% by mass or less, in resin components serving as the skeleton of the adhesive layer, the relative proportion of a thermoplastic resin component with no cross-linking reactive group such as polyacrylamide is reduced, and the heat resistance of the adhesive layer is improved. Further, when the content of the (D) water-soluble component containing an amide bond structure is 8% by mass or less, the (D) water-soluble component containing an amide bond structure can provide a moderate effect as an agent that improves coatings on rubber latex, and adhesion on organic fiber surfaces or between components blended to the adhesive composition, which is preferable.

### «(D-1) Water-soluble component containing a peptide structure»

One preferred embodiment of the adhesive composition of the present disclosure contains (A) rubber latex having unsaturated diene, (B) a polyvalent metal salt, and (D-1) a water-soluble component containing a peptide structure.

As the (D-1) water-soluble component containing a peptide structure, proteins derived from natural products such as wool, milk, beans, silk, fish scales and skin, proteins synthesized by biosynthesis, polypeptides obtained by hydrolyzing proteins, and the like can be suitably used.

Examples of the protein include gelatin and casein. The protein is a water-soluble protein that is modified collagen obtained by treating collagen molecules found in animal skin, connective tissues such as bones, scales, tendons, and hair, milk, and the like with acid or alkali, heating the collagen molecules with water to decompose them, and extracting and purifying the collagen molecules, and refers to linear polymer of amino acid.

In the (D-1) water-soluble component containing a peptide structure, such as proteins like gelatin and casein, of the adhesive composition of the present disclosure, gelatin molecules and the like form a network in water at a temperature below the gelation temperature to cover the surface of the (A) rubber latex having unsaturated diene. In one example, the (A) rubber latex having unsaturated diene has a negative (-) charge on the surface due to carboxylic acid of emulsified rosinate (emulsifier) and the like, to which cationic groups such as amino groups (-NH₂) and thiol groups (-SH) of the gelatin molecules are adsorbed by electrostatic attraction to form a composite. This covering suppresses the stickiness of the (A) rubber latex having unsaturated diene (latex-protein protective film effect).

As a result, the adhesive composition containing the (D-1) water-soluble component containing a peptide structure can suppress the adhesion of the adhesive composition to a roller or the like by suppressing the stickiness of rubber latex that is measured as the mechanical stability of the adhesive liquid under shear strain in a process of coating an organic fiber cord or the like with the adhesive composition and drying and heat curing, thereby achieving good workability and good adhesion between the adhesive composition and a coated rubber composition.

As described above, by containing the (B) polyvalent metal salt, the (D-1) water-soluble components containing a peptide structure become ligands and interact with metal ions by coordinating with them. As a result, cohesive force due to charge interaction increases between the (D-1) water-soluble components containing a peptide structure, and the fixing effect of the (D-1) water-soluble component containing a peptide structure on anionic groups on the surface of the adhered organic fiber can be enhanced through the (B) polyvalent metal salt, thereby achieving extremely good adhesion between the adhesive composition and a coated rubber composition.

The (D-1) water-soluble component containing a peptide structure is not particularly limited, and it can be extracted and obtained by heating collagen that is a component derived from skin, bones, tendons, milk secretions of living tissues, and the like of animals (for example, pigs, cows, rabbits, sheep, rats, birds, fish, and humans). The collagen can also be obtained as a commercial product. The collagen extracted from living tissues also include those obtained with gene recombination techniques or the like.

It also can be obtained by treating animal skin, milk secretions, the like with acid (acid-treated gelatin) or by treating animal bones and the like with alkali (alkali-treated gelatin). These gelatins are composed of polypeptide chains with a number average molecular weight of about 100,000, dimers and trimers thereof, and polypeptide chains obtained by hydrolyzing these, and the number average molecular weight is about 300,000.

The gelatin is not particularly limited as long as it has the ability to solidify into a gel by sol-gel transition when the temperature is lowered by heating an aqueous solution of the gelatin and then cooling it.

Proteins such as gelatin or milk secretions obtained as described above can be further decomposed by heating, acid or alkali, or proteolytic enzymes to obtain polypeptide with a number average molecular weight of 2,000 to 26,000 and used as polypeptide. These may be used alone or in combination of two or more. In the present disclosure, polypeptide obtained by hydrolyzing proteins of milk secretions can be preferably used.

### <<(D-2) Water-soluble compound containing an acrylamide structure>>

One preferred embodiment of the adhesive composition of the present disclosure contains (A) rubber latex having unsaturated diene, (B) a polyvalent metal salt, and (D-2) a water-soluble compound containing an acrylamide structure.

By using the (D-2) water-soluble compound containing an acrylamide structure together with the (A) rubber latex having unsaturated diene in the adhesive composition, the acrylamide compound covers the surface of the rubber latex particles and suppresses aggregation of the rubber latex particles. As a result, the dispersibility of the rubber latex under mechanical loads increases, and excellent mechanical stability can be achieved.

As a result, the adhesive composition containing the (D-2) water-soluble compound containing an acrylamide structure can suppress the adhesion of the adhesive composition to a roller or the like in a process of coating an organic fiber cord with the adhesive composition for organic fiber cords and drying and heat curing, thereby achieving good workability. Further, when the (D-2) water-soluble compound containing an acrylamide structure is fixed on the surface of (A) rubber latex having unsaturated diene, good adhesion can be obtained between the adhesive composition and a coated rubber composition.

As described above, by containing the (B) polyvalent metal salt, the (D-2) water-soluble compound containing an acrylamide structure interacts with metal ions and fixes on metal ions, similar to the way polyacrylamide is used as a flocculant for heavy metal ions in aqueous solutions. As a result, cohesive force due to charge interaction increases between components of the (D-2) water-soluble compound containing an acrylamide structure, and the fixing effect of the (D-2) water-soluble compound containing an acrylamide structure on anionic groups on the surface of the adhered organic fiber can be enhanced through the (B) polyvalent metal salt, thereby achieving good adhesion between the adhesive composition and a coated rubber composition.

The (D-2) water-soluble compound containing an acrylamide structure can have a structure containing (a) (meth)acrylamide, and/or, (b) a copolymer containing a vinyl monomer having a cationic group, and/or, (c) a vinyl monomer having an anion group, and/or (d) a copolymer containing another polymerizable monomer that is copolymerizable.

In the present disclosure, the (a) (meth)acrylamide refers to acrylamide and methacrylamide. In the following description, (meth)acryl is the same as acryl and/or methacryl, and will be abbreviated in the same manner. In the compound containing an acrylamide structure having a cationic group and/or a carboxyl group, the "acrylamide structure" can be obtained from a structure obtained by polymerizing acrylamide components mainly composed of the (a) (meth)acrylamide. The (meth)acrylamide can be used alone or in combination of two types. Acrylamide is preferably used alone from the viewpoint of economic efficiency.

The content ratio of the (a) (meth)acrylamide is, for example, 50 mol% or more and preferably 60 mol% or more, and is preferably 100 mol% or less, with respect to all monomers of acrylamide-based polymer. When the (a) component is less than 50 mol%, the adhesive strength due to cohesive force such as hydrogen bonding due to amide moiety is reduced.

Examples of the (b) vinyl monomer having a cationic group include vinyl monomers having a primary amino group, a secondary amino group, a tertiary amino group, or quaternary ammonium salts.

Examples of the vinyl monomer having a primary amino group include 2-propenylamine, 2-methyl-2-propenylamine; inorganic acid salts such as hydrochlorides or sulfates of these primary amino-based monomers; and organic acid salts such as formates or acetates of these primary amino-based monomers.

Examples of the vinyl monomer having a secondary amino group include di(2-propenyl)amine (diallylamine), di(2-methyl-2-propenyl)amine; inorganic acid salts such as hydrochlorides or sulfates of these secondary amino-based monomers; and organic acid salts such as formates or acetates of these secondary amino-based monomers.

Examples of the vinyl monomer having a tertiary amino group include dialkylaminoalkyl (meth)acrylates such as N,N-dimethylaminoethyl (meth)acrylate, N,N-diethylaminoethyl (meth)acrylate, and N,N-dimethylaminopropyl (meth)acrylate; dialkylaminoalkyl (meth)acrylamides such as N,N-dimethylaminoethyl (meth)acrylamide, N,N-diethylaminoethyl (meth)acrylamide, N,N-dimethylaminopropyl (meth)acrylamide, and N,N-diethylaminopropyl (meth)acrylamide; tertiary amine-based monomers such as allylamine, diallylamine, and vinylpyridine; inorganic acid salts such as hydrochlorides or sulfates of these tertiary amine-based monomers; and organic acid salts such as formates or acetates of these tertiary amine-based monomers. Among the above, N,N-dimethylaminoethyl (meth)acrylate is preferred in terms of polymerizability and cost.

The vinyl monomer having quaternary ammonium salts is a cationic copolymerizable monomer having a quaternary ammonium group and having an ethylenic double bond. Examples thereof include a vinyl monomer of a quaternary ammonium salt obtained by reacting the vinyl monomer having a tertiary amino group with an alkylating agent (a quaternary compound of a tertiary amino-based monomer), and a quaternary compound obtained by quaternizing a tertiary amino group of a diallylamine derivative monomer. These quaternary ammonium-based monomers can be used alone or in combination of two or more.

For the quaternary compound of a tertiary amino-based monomer, examples of the alkylating agent for quaternizing the tertiary amino group of the polymerizable monomer having a tertiary amino group include alkyl halides such as methyl chloride and methyl bromide; aralkyl halides such as benzyl chloride; and quaternary compounds using dimethyl sulfate, diethyl sulfate, epichlorohydrin, glycidyltrialkylammonium chloride, 3-chloro-2-hydroxypropyltrimethylammonium chloride, and the like.

Among these quaternary compounds of a tertiary amino-based monomer, a quaternary compound of dialkylaminoalkyl (meth)acrylamide is preferred. Further, preferred examples of the alkylating agent for quaternizing include quaternary compounds using methyl chloride or benzyl chloride.

Examples of the quaternary compound of a diallylamine derivative monomer include diallyldimethylammonium chloride, diallyldimethylammonium bromide, diallyldiethylammonium chloride, diallyldibutylammonium chloride, and diallylmethylethylammonium chloride.

Among these quaternary compounds of a diallylamine derivative monomer, diallyldimethylammonium chloride is preferred.

In the present disclosure, these vinyl monomers having a primary amino group, a secondary amino group, a tertiary amino group, or quaternary ammonium salts can be used alone or in combination of two or more.

For primary to tertiary amino groups, dissociation of amino groups is suppressed at a pH of 7 or higher. On the other hand, if it contains a quaternary ammonium base, dissociation is possible even at a pH of 9 or higher, so that the cationic function can generally be maintained over a wide range of pH when mixed with latex having a pH of 10 or higher. Because the primary amine group has a higher hydrogen bonding force than tertiary and quaternary amines, the interactions with other components of the adhesive composition can be increased.

The content ratio of the (b) vinyl monomer having a cationic group is not particularly limited. When it is contained, the content ratio is, for example, 0.01 mol% or more, preferably 0.5 mol% or more, and is, for example, 20 mol% or less, preferably 10 mol% or less, with respect to all monomers of the acrylamide-based polymer.

When the content ratio of the vinyl monomer having a cationic group is 0.01 mol% or more, it is adsorbed by coacervation to the surface of latex particles dispersed in water by an anionic surfactant and coated on the surface, thereby suppressing the stickiness of latex. The content ratio is preferably 0.5 mol% or more. When the content ratio is 20 mol% or less, the aggregability between particles is increased, which is not preferable. When the content ratio of the vinyl monomer having a cationic group is 10 mol% or less, the degree of polymerization during production hardly shortens, which is preferable.

The (c) vinyl monomer having an anion group is not particularly limited as long as it is a vinyl monomer having an anion group in molecule. Examples thereof include an unsaturated monocarboxylic acid, an unsaturated dicarboxylic acid, an unsaturated tricarboxylic acid, an unsaturated tetracarboxylic acid, and salts thereof. Specific examples thereof include an unsaturated monocarboxylic acid such as (meth)acrylic acid, angelic acid, tiglic acid, crotonic acid, and isocrotonic acid; an unsaturated dicarboxylic acid such as maleic acid, fumaric acid, itaconic acid, aconitic acid, mesaconic acid, muconic acid, and citraconic acid; an unsaturated tricarboxylic acid such as a 3-butene-1,2,3-tricarboxylic acid, 4-pentene-1,2,4-tricarboxylic acid, and aconitic acid; alkali metal salts such as sodium salts and potassium salts, or ammonium salts of these various organic acids; sulfonic acid-based monomers having a vinyl group such as vinyl sulfonic acid, styrene sulfonic acid, 2-acrylamido-2-methylpropanesulfonic acid, (meth)allylsulfonic acid, and diacryloylimide; and salts such as alkali metal salts such as sodium salts and potassium salts, or ammonium salts of these various organic acids.

In the present disclosure, these vinyl monomers having an anionic carboxyl group and salts thereof can be used alone or in combination of two or more. Among the above, an unsaturated monocarboxylic acid and an unsaturated dicarboxylic acid, specifically, acrylic acid, 2-acrylamide-N-glycolic acid, itaconic acid and its salts are preferred from the viewpoint of polymerizability and cost, and an acrylic acid or its sodium salt is particularly preferred.

The content ratio of the (c) vinyl monomer having an anionic group is not particularly limited. When it is contained, the content ratio is, for example, 0.01 mol% or more, preferably 0.5 mol% or more, and is, for example, 20 mol% or less, preferably 10 mol% or less, with respect to all monomers of the acrylamide-based polymer.

When polymerization components contain 0.01 mol% or more of anionic polymerizable monomer, polyamide adsorbed to latex has dispersibility due to the anionic group, which increases the effect of suppressing stickiness. On the other hand, when the number of carboxyl groups is increased, the acidity increases in the rubber vulcanization, and the sulfur cross-linking reaction of rubber latex decreases when the acidity is strong, so that cross-linking of the adhesive layer tends to decrease.

The (D-2) water-soluble compound containing an acrylamide structure may be (d) a copolymer containing another polymerizable monomer that is copolymerizable from the viewpoint of processability.

Specific examples of the other polymerizable monomer include N-substituted lower alkyl acrylamide other than (meth)acrylamide such as N-ethyl acrylamide, N,N-dimethyl acrylamide, and N-isopropylacrylamide; N,N-dialkyl (meth)acrylamide such as N,N-dimethyl (meth)acrylamide, N,N-diethyl (meth)acrylamide, and N,N-diisopropyl (meth)acrylamide; alkylene bis(meth)acrylamide such as methylene bis(meth)acrylamide and ethylene bis(meth)acrylamide; allyl (meth)acrylamide; and a N-substituted acrylamide-based monomer such as N,N'-dimethylacrylamide, diacetone acrylamide, and isopropylacrylamide. Examples of another polymerizable monomer that is copolymerizable and contains an imide group include diacryloylimide. Alkyl (meth)acrylate and hydroxyalkyl (meth)acrylate are preferred.

Examples of another polymerizable monomer that is copolymerizable and contains no amide group or imide group include alkyl (meth)acrylate such as methyl (meth)acrylate, ethyl (meth)acrylate, propyl (meth)acrylate, butyl (meth)acrylate, 2-ethylhexyl (meth)acrylate, and cyclohexyl (meth)acrylate; (meth)acrylate having a hydroxyl group such as hydroxyalkyl (meth)acrylate such as hydroxyethyl (meth)acrylate and hydroxypropyl (meth)acrylate, and glycerol mono(meth)acrylate; polyalkylene glycol mono(meth)acrylate such as diethylene glycol(meth)acrylate and methoxypolyethylene glycol(meth)acrylate; polyalkylene glycol di(meth)acrylate such as ethylene glycol di(meth)acrylate and diethylene glycol di(meth)acrylate; polyalkylene glycol monoether mono(meth)acrylate such as acrylate of a diethylene glycol monoethyl ether compound; epoxy acrylate; urethane acrylate; a nitrile compound-based monomer such as acryloylmorpholine and (meth)acrylonitrile; olefins such as vinyl acetate, vinyl chloride, vinylidene chloride, ethylene, propylene, and butene; substituted vinyl acetate such as isopropenyl acetate and 1-methoxyvinyl acetate; and an aromatic vinyl monomer such as styrene, α-methylstyrene, vinyltoluene, vinylpyrrolidone, and vinyloxazoline.

These other polymerizable monomers may be used alone or in combination of two or more. Among the above, from the viewpoint that when a branched structure is introduced by an elongation reaction during polymerization, a cured coating after heat treatment of the adhesive composition obtains high hardness and excellent adhesion to a base material, it is preferable to use a cross-linking monomer containing an amide group such as a N-substituted acrylamide-based monomer such as methylene bis(meth)acrylamide, ethylene bis(meth)acrylamide, allyl (meth)acrylamide, N,N'-dimethyl acrylamide, diacetone acrylamide, and isopropylacrylamide; a cross-linking monomer containing an imide group such as diacryloylimide; a nitrogen-free bifunctional cross-linking monomer such as divinylbenzene, ethylene glycol di(meth)acrylate, diethylene glycol di(meth)acrylate, triethylene glycol di(meth)acrylate, and allyl (meth)acrylate; and a nitrogen-free polyfunctional cross-linking monomer such as pentaerythritol triacrylate, trimethylolpropane acrylate, and tetraallyloxyethane. Among the above, N,N-dialkyl (meth)acrylamide and alkylene bis(meth)acrylamide are preferred, and N,N-dimethylacrylamide and methylene bis(meth)acrylamide are more preferred.

Monomers used in the (d) copolymer containing another polymerizable monomer that is copolymerizable are not limited to the monomers exemplified above. It is an optional component, and the amount used is not particularly limited. However, it is approximately 0.01 mol% or more and preferably 0.1 mol% to 40 mol%. For example, it is 0.01 mol% or more and preferably 0.1 mol% or more, and for example, it is 30 mol% or less and preferably 20 mol% or less.

The (D-2) water-soluble compound containing an acrylamide structure may be further modified, and it includes a cross-linked modified product obtained by adding a hydrazide compound such as hydrazine, a modified product in which a part of the acrylamide structure derived from (a) (meth)acrylamide is modified into a cationic group by Mannich modification of polyacrylamide, a modified product of cationic polyacrylamide modified with glyoxal or other formaldehyde-based cross-linking agents such as glyoxalated polyacrylamide, and the like.

Specifically, the (D-2) water-soluble compound containing an acrylamide structure may be referred to as follows. When it is a copolymer containing (a) (meth) acrylamide, it is also referred to as nonionic polyacrylamide. When it is a copolymer containing (a) (meth)acrylamide and (b) a vinyl monomer having a cation group, it is also referred to as cationic polyacrylamide. When it is a compound containing a copolymer of (a) (meth)acrylamide and (c) a vinyl monomer having an anion group, it is also referred to as anionic polyacrylamide. When it is a copolymer of a polymer containing (a) (meth)acrylamide and (b) a vinyl monomer having a cationic group and (c) a vinyl monomer having an anionic group, it is also referred to as amphoteric polyacrylamide.

These (D-2) water-soluble compounds containing an acrylamide structure can be obtained, for example, by reacting nonionic polyacrylamide, cationic polyacrylamide, anionic polyacrylamide containing a carboxyl group, or amphoteric polyacrylamide with a known method. For example, although the production method is not particularly limited, it can be obtained by copolymerizing a mixture of (meth)acrylamide and a cationic vinyl monomer and/or an ionic vinyl-based monomer by aqueous solution polymerization, emulsion polymerization using water and an organic solvent, suspension polymerization, or the like. The production can be performed with various conventionally known methods such as simultaneous polymerization and continuous dropping polymerization. For example, the copolymer can be produced by charging the mixture of monomers and water, adding a known radical polymerization initiator such as persulfate such as potassium persulfate and ammonium persulfate or a redox-based polymerization initiator, further adding a chain transfer agent as necessary, and performing polymerization at about 15°C to 100°C for 0.1 to several hours under stirring. The polymerization reaction is stopped by adding a known polymerization terminator such as sodium thiosulfate or sodium sulfite.

Examples of the chain transfer agent include isopropyl alcohol and mercaptos (e.g., mercaptoethanol, thiourea, thioglycolic acid, mercaptopropionic acid, thiosalicylic acid, thiolactic acid, aminoethanethiol, thioglycerol, and thiomalic acid). The amount of such a chain transfer agent used is usually 0.01 parts by mass to 5 parts by mass and preferably 0.1 parts by mass to 3 parts by mass, with respect to 100 parts by mass of the total monomer weight of the compound containing an acrylamide structure having a cationic group and/or a carboxyl group.

The (D-2) water-soluble compound containing an acrylamide structure thus obtained can be obtained in the form of an aqueous solution or aqueous dispersion product. Polyacrylamide obtained in a gel form may be mechanically pulverized and then redispersed in water before use. When used in the adhesive composition of the present disclosure, an aqueous solution is preferred.

The weight average molecular weight of the copolymerized polyacrylamide thus obtained is, for example, 1 million or more, preferably 2 million or more, and further preferably 2 million or more, and is, for example, 15 million or less, preferably 10 million or less, and further preferably 8 million or less. When the weight average molecular weight of the acrylamide-containing compound is 1 million or more, aggregation of the rubber latex particles can be more reliably suppressed, and when the weight average molecular weight of the acrylamide-containing compound is 15 million or less, there is no problem in that the acrylamide-containing compound is cross-linked and gelatinized.

When the pH is usually about 3 to 9 and the viscosity is about 100 to 10000 m Pa·s in an aqueous solution of 10 wt%, the liquid can be easily used because the storage, transfer and the like in a liquid state can be easily achieved.

The (D-2) water-soluble compound containing an acrylamide structure may be a commercially available nonionic, anionic, cationic, or amphoteric polyacrylamide product. In particular, papermaking chemicals such as a yield improver, a filterability improver, and a paper strength enhancer, which are internal additives for paper, can be used.

A copolymerized polyacrylamide of the papermaking chemical can obtain a function of imparting strength to a paper product by being fixed (adsorbed) to pulp. The addition of a paper strength enhancer improves the adhesive strength between cellulose fibers that make up paper during papermaking (Yasushi Takahata, Utilization of Synthetic Polymer in the Paper Industry. Part I, JAPAN TAPPI JOURNAL, 1973, Vol. 27, No. 12, p. 607). An amide group of a polyacrylamide resin is highly reactive and has a strong affinity with filler because of hydrogen bond, van der Waals force, and the like, so that the cohesive force is excellent. Therefore, the amide moiety is a moiety that improves the paper strength. In the case of a compound containing an acrylamide structure having acrylamide such as (a) (meth)acrylamide, the adhesive composition of the present disclosure can also have the effect of improving the cohesive failure resistance in an adhesive layer between adhered fiber filaments, which is preferable.

As described above, by containing the (B) polyvalent metal salt, the (D-2) water-soluble compounds containing an acrylamide structure become ligands and interact with metal ions by coordinating with them. As a result, cohesive force due to charge interaction increases between the (D-2) water-soluble compounds containing an acrylamide structure, and the fixing effect of the component of (D-2) water-soluble compound containing an acrylamide structure on anionic groups on the surface of the adhered organic fiber can be enhanced through the (B) polyvalent metal salt, thereby achieving extremely good adhesion between the adhesive composition and a coated rubber composition.

When the above-described polyacrylamide-based resin has a structure in which a branched structure is introduced through the action of a chain transfer substituent, it has many contact points with a base material such as fiber, which is considered to improve the affinity and adhesion and provide excellent adhesive performance. Further, despite its relatively high molecular weight, it is considered that, with the branched structure, the product has a high solid content and low viscosity, has excellent workability and drying properties, and exhibits a variety of distinctive performances without deteriorating the cohesive force.

Further, ionic groups of anionic group and cationic group function as fixing sites to pulp fibers. Due to the anionic nature of carboxyl group of anionic group, when the (B) polyvalent metal salt such as aluminum sulfate is added, the polyvalent metal salt functions as a fixing agent and is well fixed to fibers. Cationic polymer electrolytes generally have inferior thermal stability compared to anionic and nonionic polymers, and because of their cationic nature, they are used as flocculants and for fixing on paper (Seishi MACHIDA, Some Problems on the Water-Soluble Polymers, SSOCJ Journal, 1975, Vol. 33, No. 3, p. 156).

Further, polyamide having an anionic group and a cationic group has an isoelectric point in a surface state with amphoteric properties of cationic group and anionic group due to hydrolysis of some amide bonds on the surface of polyamide resin or the like that is a nylon fiber material as an adherend in an embodiment of the present disclosure. Therefore, it is possible to study the use of amphoteric polyamide that has an isoelectric point near neutrality as a fixing agent on fiber surface for a compound that dyes or fixes to the surface. Further, in one embodiment, the stickiness of latex can be suppressed by coating an anionic emulsifier of rubber latex with the cationic group of the amphoteric polyacrylamide, and dispersing it with the anionic group of the amphoteric polyamide.

In the nonionic polyacrylamide containing (a) (meth)acrylamide, some acrylamide structures decompose to form anionic and cationic groups, so actually, it is not completely nonionic, but has some amphoteric properties.

These nonionic polyacrylamides are inexpensive and have ability to fix themselves due to some amphoteric properties, which is preferable. Further, amphoteric polyacrylamides have a function of fixing themselves to a base material while having a function of fixing themselves to rubber latex. Even if the amount is increased and the cationic group becomes excessive, they have a function of fixing by themselves. Therefore, they can be satisfactorily used because they hardly thicken the liquid.

### <(E) Amine compound>

One embodiment of the adhesive composition of the present disclosure contains (A) rubber latex having unsaturated diene, (B) a polyvalent metal salt, and (E) an amine compound.

As the (E) amine compound, a polyfunctional amine compound having two or more primary to tertiary amino groups is preferably used. When the (E) amine compound is a polyfunctional amine compound having two or more primary to tertiary amino groups, better adhesion can be obtained between an organic fiber and a coated rubber composition when the adhesive composition is used on organic fibers.

Examples of the (E) amine compound include ethylenediamine, propylenediamine, trimethylenediamine, tetramethylenediamine, pentamethylenediamine, hexamethylenediamine, isophoronediamine, dicyclohexylmethane-4,4'-diamine, phenylenediamine, metaxylenediamine, diethylenetriamine, triethylenetetramine, triaminopropane, and amino group-containing resins such as polyvinylamine, polyethyleneimine, polyallylamine, and polylysine.

The number average molecular weight of the amino group-containing resin is, for example, 100 to 1,000,000, preferably 200 to 10,000, and more preferably 300 to 5,000. The number average molecular weight of the amino group-containing resin is determined, for example, with a known viscosity method. When the molecular weight of the amino group-containing resin is too large and the viscosity becomes too high due to gel cross-linking in the adhesive composition liquid, problems may occur in terms of workability.

In the present disclosure, among the above, polyethyleneimine that is an amino group-containing resin can be suitably used as the (E) amine compound. Polyethyleneimine is a water-soluble polymer obtained by polymerizing ethyleneimine, and is a polymer containing repeating units of amine and ethylene (CH₂CH₂). Polyethyleneimine generally contains primary, secondary, and tertiary amino groups. For example, polyethyleneimine that is not a completely linear molecule and that has a branched structure and has an average molecular weight of about 600 as a commercially available reagent can be used. The polyethyleneimine is available in liquid form, but it is preferably used as an aqueous solution in the adhesive composition of the present disclosure.

The (E) amine compound (especially polyethyleneimine) is emulsified by the action of an emulsifier on the surface of (A) rubber latex dispersed in an aqueous solvent. Further, due to coordination interactions with metal ions similar to those used as coagulants for heavy metal ions in an aqueous system, a protective film on the latex surface is strengthened by the (B) polyvalent metal salt, which suppresses the stickiness of rubber latex. As a result, it is possible to suppress the adhesion of the adhesive composition to a roll or the like in a process of coating an organic fiber cord with the adhesive composition and drying and heat curing, thereby achieving good workability.

As described above, by containing the (B) polyvalent metal salt, the (E) amine compound interacts with metal ions by coordinating with them due to unpaired electrons of amine, which increases the cohesive force due to charge interactions between polymeric compounds of the (E) amine compound. Further, the effect of fixing to anionic groups on the surface of adhered organic fibers can be enhanced through the (B) polyvalent metal salt to which the (E) amine compound component is coordinated, thereby achieving extremely good adhesion between the adhesive composition and a coated rubber composition.

The adhesive composition containing the (E) amine compound has the effect of strengthening the fixation on the surface of adhered organic fibers due to the (B) polyvalent metal salt, and has good adhesion to organic fiber cords.

The content (solid content) of the (E) amine compound in the total solid content of the adhesive composition is not particularly limited, but it is preferably 0.3% by mass or more and more preferably 0.5% by mass or more. Further, the content (solid content) of the (E) amine compound is preferably 35% by mass or less, more preferably 25% by mass or less, and still more preferably 10% by mass or less. When the adhesive composition is vulcanized and composited with adhered rubber, sulfur components transferred from rubber vulcanize the rubber latex of the adhesive composition, and the amine component can accelerate the rubber vulcanization due to sulfur. Therefore, by setting the content of the (E) amine compound to 35% by mass or less, the occurrence of hardening and deterioration of the physical properties of the adhesive layer can be suppressed without excessive cross-linking due to vulcanization (over-vulcanization).

### <(F) Polyvinyl alcohol>

One embodiment of the adhesive composition of the present disclosure contains (A) rubber latex having unsaturated diene, (B) a polyvalent metal salt, and (F) polyvinyl alcohol.

The (F) polyvinyl alcohol is not particularly limited, and conventionally known polyvinyl alcohol such as those produced by saponifying polyvinyl acetate with alkali, acid, aqueous ammonia, or the like can be used.

The (F) polyvinyl alcohol may be partially saponified polyvinyl alcohol, and preferably has a degree of saponification of 80 mol% or more. When the (F) polyvinyl alcohol has a degree of saponification of 80 mol% or more, better adhesion can be obtained between an organic fiber and a coated rubber composition when the adhesive composition is used on organic fibers.

The degree of polymerization of the (F) polyvinyl alcohol is not particularly limited as long as the polyvinyl alcohol is soluble in water, but it is preferably within a range of 100 to 10,000 and more preferably 200 to 5000. When the molecular weight of the (F) polyvinyl alcohol is 10,000 or less, it is possible to avoid the problem of decreased workability due to increased adhesive composition liquid viscosity.

The (F) polyvinyl alcohol is available in the form of powder or aqueous solution, and it is preferably used as an aqueous solution in the adhesive composition of the present disclosure.

As the (F) polyvinyl alcohol, copolymers of vinyl alcohol and monomers copolymerizable with vinyl alcohol, such as ethylene-vinyl alcohol copolymer, partially saponified ethylene-vinyl alcohol copolymer, and acetoacetyl group-modified polyvinyl alcohol, and the like can be used. In the present disclosure, it is particularly preferable to use (F-1) acetoacetyl group-modified polyvinyl alcohol. When the (F) polyvinyl alcohol is acetoacetyl group-modified polyvinyl alcohol, better adhesion can be obtained between an organic fiber and a coated rubber composition when the adhesive composition is used on organic fibers.

The (F-1) acetoacetyl group-modified polyvinyl alcohol is obtained by reacting a polyvinyl alcohol-based resin with diketene with a known method or the like. For example, although there is no particular limitation on the production method, it can be obtained with a method of adding diketene after dispersing a polyvinyl alcohol-based resin in a solvent such as acetic acid, a method of adding diketene after previously dissolving a polyvinyl alcohol-based resin in a solvent such as dimethylformamide or dioxane, or a method of contacting diketene gas or liquid diketene with a polyvinyl alcohol-based resin.

As the (F-1) acetoacetyl group-modified polyvinyl alcohol, one having a degree of acetoacetyl group modification of 0.05 mol% or more can usually be used. The degree of acetoacetyl group modification of the acetoacetyl group-modified polyvinyl alcohol is preferably 0.1 mol% to 40 mol%, more preferably 1 mol% to 20 mol%, and most preferably 2 mol% to 15 mol%. When the degree of modification of the acetoacetyl group is 0.05 mol% or more, the adhesive layer can obtain sufficient water resistance.

A commercially available product of the (F-1) acetoacetyl group-modified polyvinyl alcohol is not particularly limited. Examples thereof include Gohsenx Z series manufactured by Mitsubishi Chemical Corporation, and specific examples thereof include Z-100, Z-200, Z-210, Z-220, Z-300, Z-320, and Z-410.

In the adhesive composition of the present disclosure, the (F) polyvinyl alcohol, due to its function as an emulsifier, coats the surface of (A) rubber latex having unsaturated diene and forms a composite with the rubber latex having unsaturated diene. With this coating, it is possible to obtain an effect of suppressing the stickiness of (A) rubber latex having unsaturated diene.

The (F) polyvinyl alcohol, especially the (F-1) acetoacetyl group-modified polyvinyl alcohol, has been known as a condensation agent with various materials such as amine, hydrazide, aldehyde and metal salt when dissolved in water, and as a self-cross-linking agent through heat treatment. It has been widely used in applications such as emulsifiers for vinyl acetate emulsion, condensation agents for coatings such as coated paper and uncoated paper that require water resistance, and applications that impart water resistance to adhesives, binders, and the like. As a result, the adhesive composition of the present disclosure can suppress the stickiness of rubber latex that is measured as the mechanical stability of the adhesive liquid under shear strain to suppress the adhesion of the adhesive composition to a roller or the like in a process of coating an organic fiber cord with the adhesive composition and drying and heat curing, thereby achieving good workability.

Further, by containing the (B) polyvalent metal salt, the hydroxyl group, or the anionic group of the carboxyl group the (F) polyvinyl alcohol interacts with the polyvalent metal ion. Then, the polyvalent metal ion interposes between the anionic group of the (F) polyvinyl alcohol and the anionic group on the surface of an adhered organic fiber resin. As a result, the effect of fixing to the organic fiber surface can be enhanced, thereby achieving extremely good adhesion between the adhesive composition and a coated rubber composition.

In the process of coating an organic fiber cord surface with the adhesive composition and drying and heat curing, the (F-1) acetoacetyl group-modified polyvinyl alcohol undergoes chemical cross-linking due to its self-cross-linking agent properties during heat treatment and, if the adhesive composition contains other components, undergoes chemical cross-linking with those components, thereby achieving better adhesion between an organic fiber and a coated rubber composition.

The content (solid content) of the (F) polyvinyl alcohol in the total solid content of the adhesive composition is not particularly limited. It is preferably 0.05% by mass or more. It is preferably 25% by mass or less. The content of the (F) polyvinyl alcohol is more preferably 0.2% by mass or more and 15% by mass or less, and still more preferably 0.4% by mass or more and 12% by mass or less. When the content of the (F) polyvinyl alcohol is 0.05% by mass or more, it coats the (A) rubber latex having unsaturated diene due to its function as an emulsifier to suppress the stickiness of rubber latex. Further, when the content of the (F) polyvinyl alcohol is 25% by mass or less, the amount of (F) polyvinyl alcohol contained in the adhesive composition liquid is not too large, and a decrease in workability caused by increased adhesive composition liquid viscosity can be suppressed.

### <(G) Epoxide compound>

One preferred embodiment of the adhesive composition of the present disclosure optionally further contains (G) an epoxide compound. In this case, excellent adhesiveness and mechanical stability can be realized even when formaldehyde and resorcin are not contained.

As the (G) epoxide compound, various compounds having at least one epoxy group in one molecule can be used. The epoxide compound acts as a cross-linking agent for the adhesive composition, excellent adhesiveness can be realized, and properties such as heat resistance, durability, strength, flexibility, and electrical insulation can be improved.

The (G) epoxide compound is not particularly limited. It is preferably a compound having two or more epoxy groups in one molecule and more preferably a compound having four or more epoxy groups in one molecule. When the epoxide compound has two or more epoxy groups in one molecule, the compound effectively functions as a cross-linking agent due to the epoxy groups, and when it has four or more epoxy groups in one molecule, cross-linking is performed more densely, and flexibility is also improved.

Although not particularly limited, the epoxide compound preferably has ten or less epoxy groups in one molecule. In this case, the cross-linking density is not too high, and toughness can also be obtained.

Specific examples of the (G) epoxide compound include reaction products of epichlorohydrin and polyhydric alcohols such as diethylene glycol/diglycidyl ether, polyethylene/diglycidyl ether, polypropylene glycol/diglycidyl ether, neopentyl glycol/diglycidyl ether, 1,6-hexanediol/diglycidyl ether, glycerol/polyglycidyl ether, trimethylolpropane/polyglycidyl ether, polyglycerol/polyglycidyl ether, pentaerythrithiol/polyglycidyl ether, diglycerol/polyglycidyl ether, and sorbitol/polyglycidyl ether. When these compounds are used as the epoxy compound, the adhesiveness between an organic fiber cord and rubber can be further improved. Further, when the (G) epoxide compound is a reaction product of epichlorohydrin and polyhydric alcohols, the adhesiveness between an organic fiber and rubber can be further improved.

The (G) epoxide compound functions as a cross-linking agent and is cross-linked with at least one component selected from the group consisting of the above (C) to (F) contained in the adhesive composition by addition reaction to a nucleophilic site, thereby contributing, for example, to strengthening of adhesion between an organic fiber and a coated rubber composition.

The content (solid content) of the (G) epoxide compound in the total solid content of the adhesive composition is not particularly limited, but it is preferably 0.1% by mass or more and more preferably 0.5% by mass or more. Further, it is preferably 20% by mass or less and more preferably 10% by mass or less. When the content is 0.1% by mass or more, the adhesiveness between an organic fiber and a coated rubber composition can be further improved. Further, when the content is 40% by mass or less, it is possible to relatively secure a certain amount or more of other components such as rubber latex blended in the adhesive composition, which improves the adhesiveness to rubber as an adherend.

### <(H) Aqueous compound having a (thermal dissociative blocked) isocyanate group>

One preferred embodiment of the adhesive composition of the present disclosure optionally further contains an (H) aqueous compound having a (thermal dissociative blocked) isocyanate group. In this case, excellent adhesiveness and mechanical stability can be realized even when formaldehyde and resorcin are not contained.

The (thermal dissociative blocked) isocyanate group of the (H) aqueous compound having a (thermal dissociative blocked) isocyanate group means a thermal dissociative blocked isocyanate group or an isocyanate group.

Specifically, the (thermal dissociative blocked) isocyanate group includes (i) a thermal dissociative blocked isocyanate group formed by the reaction of an isocyanate group with a thermal dissociative blocking agent for the isocyanate group, (ii) an isocyanate group where the isocyanate group has not reacted with a thermal dissociative blocking agent for the isocyanate group, (iii) an isocyanate group formed by dissociation of a thermal dissociative blocking agent from a thermal dissociative blocked isocyanate group, and (iv) an isocyanate group.

The "aqueous" of the (H) aqueous compound having a (thermal dissociative blocked) isocyanate group indicates that it is water-soluble or water-dispersible. The "water-soluble" does not necessarily mean completely water-soluble, but also means that it is partially water-soluble, and it also means that phase separation will not occur in an aqueous solution of the adhesive composition.

The (H) aqueous compound having a (thermal dissociative blocked) isocyanate group is preferably (H-1) a water-dispersible (thermal dissociative blocked) isocyanate compound that contains an addition product of polyisocyanate having an aromatic ring and a blocking agent having at least one active hydrogen group (hereinafter, also simply referred to as "(H-1) component"). This case provides better adhesion between an organic fiber and a coated rubber composition when the adhesive composition is used on organic fibers.

For the (H-1) component, the active hydrogen group refers to a group containing hydrogen that becomes active hydrogen (atomic hydrogen (hydrogen radical) and hydride ion (hydride)) when placed under suitable conditions. Examples of the active hydrogen group include an amino group and a hydroxyl group.

The thermal dissociative blocking agent is not particularly limited if it is a blocking agent compound that protects the isocyanate group from any chemical reaction where the blocking agent can be dissociated by heat treatment as necessary to restore the isocyanate group. Specifically, it is preferably a thermal dissociation temperature at which the cross-linking reactivity of the isocyanate group, which is blocked by the thermal dissociative blocking agent and suppressed, can be recovered at the temperature of the heat treatment for heat curing after coating and drying the adhesive liquid in the process illustrated in FIG. 1.

Examples of the blocking agent include alcohol, phenol, active methylene, oxime, lactam, and amine. Specific examples thereof include, but are not limited to, lactams such as ε-caprolactam, δ-valerolactam, and γ-butyrolactam; phenols such as phenol, cresol, ethylphenol, butylphenol, octylphenol, nonylphenol, dinonylphenol, thiophenol, chlorphenol, and amylphenol; oximes such as methylethylketoxime, acetone oxime, acetophenone oxime, benzophenone oxime, and cyclohexanone oxime; alcohols such as methanol, ethanol, butanol, isopropyl alcohol, butyl alcohol, and cyclohexanol; malonic acid dialkyl esters such as dimethyl malonate and diethyl malonate; active methylenes such as methyl acetoacetate, ethyl acetoacetate, and acetylacetone, mercaptans such as butyl mercaptan and dodecyl mercaptan; amides such as acetanilide and acetic acid amide; imides such as succinimide, phthalic acid imide, and maleic acid imide; sulfites such as sodium bisulfite; cellosolves such as methyl cellosolve, ethyl cellosolve and butyl cellosolve; pyrazoles such as pyrazole, 3,5-dimethylpyrazole, 3-methylpyrazole, 4-benzyl-3,5-dimethylpyrazole, 4-nitro-3,5-dimethylpyrazole, 4-bromo-3,5-dimethylpyrazole, and 3-methyl-5-phenylpyrazole; amines such as dimethylamine, diethylamine, di-n-propylamine, diisopropylamine, dicyclohexylamine, diphenylamine, xylidine, N,N-diethylhydroxyamine, N,N'-diphenylformamidine, 2-hydroxypyridine, 3-hydroxypyridine, and 2-mercaptopyridine; and triazoles such as 1,2,4-triazole. A mixture of two or more of these may be used.

Among these blocking agents, it is preferable to use phenol, ε-caprolactam and ketoxime, which facilitates to obtain stable heat curing of the adhesive composition by thermal dissociation by heating.

Specifically, the (H-1) component includes aromatic polyisocyanates or aromatic aliphatic polyisocyanates. Examples of the aromatic isocyanates include phenylene diisocyanates such as m-phenylene diisocyanate and p-phenylene diisocyanate; tolylene diisocyanates such as 2,4-tolylene diisocyanate and 2,6-tolylene diisocyanate (TDI); diphenylmethane diisocyanates such as 2,4'-diphenylmethane diisocyanate, 4,4'-diphenylmethane diisocyanate (MDI), dialkyldiphenylmethane diisocyanate, and tetraalkyldiphenylmethane diisocyanate; polymethylene polyphenyl polyisocyanate (polymeric MDI); m- or p-isocyanatophenylsulfonyl isocyanates; diisocyanatobiphenyls such as 4,4'-diisocyanatobiphenyl and 3,3'-dimethyl-4,4'-diisocyanatobiphenyl; and naphthalene diisocyanates such as 1,5-naphthylene diisocyanate. Examples of the aromatic aliphatic polyisocyanates include xylylene diisocyanates such as m-xylylene diisocyanate, p-xylylene diisocyanate (XDI), and tetramethylxylylene diisocyanate; diethylbenzene diisocyanate; and α,α,α,α-tetramethylxylylene diisocyanate (TMXDI). Modified products such as carbodiimide, polyol and allophanate of the polyisocyanates are also included.

Among these polyisocyanates containing an aromatic ring in molecule, aromatic isocyanates are preferable, tolylene diisocyanate (TDI), diphenylmethane diisocyanate (MDI) or polymethylene polyphenyl polyisocyanate (polymeric MDI) are more preferable, and diphenylmethane diisocyanates (MDI) are particularly preferable, from the viewpoint of the cord focusing properties of the adhesive composition. When the (H-1) component is a block body of methylene diphenyl isocyanates, especially a block body of methylene diphenyl diisocyanate (also referred to as "diphenylmethane diisocyanate"), even better adhesion can be obtained between an organic fiber and a coated rubber composition when the adhesive composition is used on organic fibers.

Further, the (H) aqueous compound having a (thermal dissociative blocked) isocyanate group is more preferably (H-2) an aqueous urethane compound having a (thermal dissociative blocked) isocyanate group (hereinafter, also simply referred to as "(H-2) component"). This case provides better adhesion between an organic fiber and a coated rubber composition when the adhesive composition is used on organic fibers. The details of the (H-2) component will be described later for convenience.

The content (solid content) of the (H) aqueous compound having a (thermal dissociative blocked) isocyanate group in the total solid content of the adhesive composition is not particularly limited. However, it is preferably 5% by mass or more, more preferably 10% by mass or more, and still more preferably 20% by mass or more. Further, the content of the (H) aqueous compound having a (thermal dissociative blocked) isocyanate group is preferably 70% by mass or less, more preferably 60% by mass or less, and still more preferably 45% by mass or less. The reason is as follows. When the content of the (H) aqueous compound having a (thermal dissociative blocked) isocyanate group is 5% by mass or more, the adhesion between an organic fiber and a coated rubber composition can be improved. When the content of the (H) aqueous compound having a (thermal dissociative blocked) isocyanate group is 70% by mass or less, it is possible to relatively secure a certain amount or more of other components such as rubber latex blended in the adhesive composition, which improves the adhesiveness to rubber as an adherend.

In a conventional adhesive composition containing resorcin and formaldehyde, a sea-island structure is formed in which rubber latex particles (like islands) are dispersed in a phenolic resin (like the sea) in which the resorcin and formaldehyde are co-condensed, thereby obtaining good adhesion between an organic fiber and a phenolic resin coating the organic fiber surface.

On the other hand, in one preferred embodiment of the adhesive composition of the present disclosure, the (H) aqueous compound having a (thermal dissociative blocked) isocyanate group acts as an adhesion promoter because of the following two functional effects (x) and (y), instead of the phenolic resin in which the resorcin and formaldehyde are co-condensed. As a result, in the adhesive composition, the (H) aqueous compound having a (thermal dissociative blocked) isocyanate group contributes to good adhesion between an organic fiber and a coated rubber composition.

(x) A functional effect where the aqueous compound is distributed at a position near the interface between an organic fiber and an adhesive layer of the adhesive composition, so that the adhesion between the organic fiber and the adhesive layer is promoted.

(y) A functional effect where in the adhesive layer of the adhesive composition, a three-dimensional network structure is formed by cross-linking of the isocyanate group by the compound having a (thermal dissociative blocked) isocyanate group, so that the adhesive layer is reinforced.

An example of the principles of the above-described (x) and (y), which are the two functional effects of the (H) aqueous compound having a (thermal dissociative blocked) isocyanate group as an adhesion promoter, in one embodiment of the adhesive composition of the present disclosure will be described in detail.

### <<Regarding the functional effect of (x) as adhesion promoter>>

A polyester synthetic resin material such as polyethylene terephthalate, which is widely used as an organic fiber, contains a flat linear polymer chain. The surface of the polymer chain or the gaps of the polymer chain has a π-electron atmosphere derived from the aromatics and the like contained in the polymer chain. Further, polyester has a particularly small number of hydroxyl groups on the surface as compared with 6,6-nylon.

Therefore, conventionally, an adhesive composition used for an organic fiber made of polyester has contained molecules having a planar structure having an aromatic ring with aromatic π electrons on the side surface (a part that easily diffuses into the organic fiber) as an adhesion promoter for the purposes that the adhesive composition is dispersed into the gaps of the organic fiber polymer chain to obtain sufficient adhesiveness, and that an adhesive layer of the adhesive composition adheres to the organic fiber polymer chain surface.

### <<Regarding the functional effect of (y) as adhesion promoter>>

In an adhesive layer containing the component (H-1), a covalent bond is formed by isocyanate cross-linking between a hydroxyl group of the (D-2) water-soluble compound containing an acrylamide structure, and isocyanate from which a blocking agent has been dissociated by heat treatment, and this can strengthen the adhesion by the adhesive composition, as described above.

The particle size of the (H-1) component is preferably 0.01 µm to 0.50 µm as described above. This is because when the particle size of the (H-1) component is 0.50 µm or less, the problem that the (H-1) component precipitates in liquid to cause non-uniform diffusion in the adhesive layer is less likely to occur as the particle size decreases.

On the other hand, when it is (H-2) an aqueous urethane compound having a (thermal dissociative blocked) isocyanate group, the water solubility is increased. As a result, the components in the adhesive composition liquid hardly precipitate, non-uniform diffusion of the components hardly occurs even if it is stored stationary, and the adhesion state is stable over time, which is preferable.

### «Thermal dissociative blocking agent and aqueous urethane compound»

The thermal dissociative blocking agent of the (H-2) component is not particularly limited if it is a blocking agent compound that protects the isocyanate group from any chemical reaction where the blocking agent can be dissociated by heat treatment as necessary to restore the isocyanate group. Specific examples of the thermal dissociative blocking agent include the same compounds mentioned above as the blocking agent for the (H-1) component. Preferable examples thereof include phenols such as phenol, thiophenol, chlorphenol, cresol, resorcinol, p-sec-butylphenol, p-tertbutylphenol, p-sec-amylphenol, p-octylphenol, and p-nonylphenol; secondary or tertiary alcohols such as isopropyl alcohol and tert-butyl alcohol; aromatic secondary amines such as diphenylamine and xylidine; phthalic acid imides; lactams such as δ-valerolactam; caprolactams such as ε-caprolactam; malonic acid dialkyl esters such as diethyl malonate and dimethyl malonate, active methylene compounds such as acetylacetone and acetoacetic acid alkyl ester; oximes such as acetone oxime, methyl ethyl ketoxime, and cyclohexanone oxime; and basic nitrogen compounds and acid sodium sulfites such as 3-hydroxypyridine, 1,2-pyrazole, 3,5-dimethylpyrazole, 1,2,4-triazole, diisopropylamine, and N,N'-diphenylformamidine.

Among these blocking agents, phenol, ε-caprolactam and ketoxime, which facilitates stable heat curing of the adhesive composition by thermal dissociation by heating, can be suitably used.

The "aqueous" of the aqueous urethane compound indicates that it is water-soluble or water-dispersible. The water-soluble does not necessarily mean completely water-soluble, but also means that it is partially water-soluble, and it also means that phase separation will not occur in the aqueous solution of the adhesive composition.

The urethane compound of the aqueous urethane compound is a compound having a covalent bond formed between nitrogen of an amine and carbon of a carbonyl group, and it refers to a compound represented by the following general formula (2).

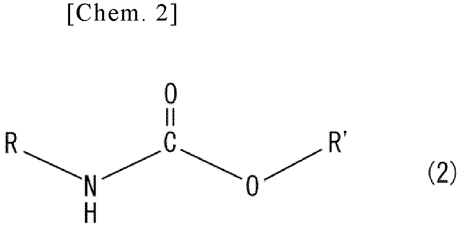

In the formula (2), R and R' represent a hydrocarbon group.

The molecular weight of the (H-2) aqueous urethane compound having a (thermal dissociative blocked) isocyanate group is not particularly limited if the compound is water-based. However, the number average molecular weight is preferably 1,500 to 100,000. The number average molecular weight is particularly preferably 9,000 or less.

As described above, a method of synthesizing the (H-2) component is not particularly limited, and a known method such as the method described in JP S63-51474 A may be used.

### <<Preferred embodiment of (H-2) aqueous urethane compound having a (thermal dissociative blocked) isocyanate group>>

A preferred embodiment of the (H-2) component is a reaction product obtained by mixing (α), (β), (γ) and (δ) at a specified mixing ratio and reacting them, where (α) is an organic polyisocyanate compound having 3 or more and 5 or less functional groups and having a number average molecular weight of 2,000 or less, (β) is a compound having 2 or more and 4 or less active hydrogen groups and having a number average molecular weight of 5,000 or less, (γ) is a thermal dissociative blocking agent, and (δ) is a compound having at least one active hydrogen group and at least one anionic, cationic, or nonionic hydrophilic group, and when the molecular weight of the isocyanate group (-NCO) is 42, the composition ratio of the (thermal dissociative blocked) isocyanate group in the reaction product is 0.5% by mass or more and 11% by mass or less. Here, the mixing ratio of (α) is 40% by mass or more and 85% by mass or less, the mixing ratio of (β) is 5% by mass or more and 35% by mass or less, the mixing ratio of (γ) is 5% by mass or more and 35% by mass or less, and the mixing ratio of (δ) is 5% by mass or more and 35% by mass or less with respect to the total amount of (α), (β), (γ) and (δ). This case provides even better adhesion between an organic fiber and a coated rubber composition when the adhesive composition is used on organic fibers. In this case, the (H-2) component has both a (thermal dissociative blocked) isocyanate group moiety and a hydrophilic moiety having a hydrophilic group, so that the self-water solubility of the urethane compound is increased.

The (α) organic polyisocyanate compound having 3 or more and 5 or less functional groups and having a number average molecular weight of 2,000 or less is not particularly limited. However, it is preferably an aromatic polyisocyanate compound and an oligomer thereof, and it may be other aliphatic, alicyclic, or heterocyclic polyisocyanate compound and an oligomer thereof. This is because the (H-2) component obtained as a reaction product after reacting the (α) organic polyisocyanate compound having 3 or more and 5 or less functional groups and having a number average molecular weight of 2,000 or less as described above is easier to disperse into the gaps of the organic fiber polymer chain.

Specific examples thereof include, as an aliphatic polyisocyanate compound, ethylene diisocyanate, 1,4-tetramethylene diisocyanate, 1,6-hexamethylene diisocyanate, 1,12-dodecane diisocyanate, 2,2,4-trimethylhexamethylene diisocyanate, 2,4,4-trimethylhexamethylene diisocyanate, dimer acid diisocyanate, and lysine diisocyanate, as an alicyclic polyisocyanate compound, cyclobutane-1,3-diisocyanate, cyclohexane-1,3-diisocyanate, cyclohexane-1,4-diisocyanate, isophorone diisocyanate, 4,4'-methylenebis (cyclohexylisocyanate), methylcyclohexane-2,4-diisocyanate, methylcyclohexane-2,6-diisocyanate, and 1,3-(isocyanatomethyl) cyclohexane, as a heterocyclic polyisocyanate compound, tolylene diisocyanate adduct of 1,3,5-tris (2'-hydroxyethyl) isocyanuric acid, as an aromatic polyisocyanate compound, m-phenylene diisocyanate, p-phenylene diisocyanate, 2,4-tolylene diisocyanate, 2,6-tolylene diisocyanate, m-xylylene diisocyanate, p-xylylene diisocyanate, 2,4'-diphenylmethane diisocyanate, 4,4'-diphenylmethane diisocyanate, m-tetramethylxylylene diisocyanate, p-tetramethylxylylene diisocyanate, methine tris(4-phenylisocyanate), tris (4-isocyanatophenyl) methane, tris thiophosphate (4-isocyanatophenyl ester), 3-isopropenyl-α',α'-dimethylbenzyl isocyanate and oligomer mixtures thereof, and modified products such as carbodiimides, polyols and allophanates of these polyisocyanate compounds.

Among the above, an aromatic polyisocyanate compound is preferable, and methylenediphenyl polyisocyanate, polyphenylene polymethylene polyisocyanate and the like are particularly preferable. Polyphenylene polymethylene polyisocyanate having a number average molecular weight of 2,000 or less is preferable, and polyphenylene polymethylene polyisocyanate having a number average molecular weight of 1,000 or less is particularly preferable. This is because the (H-2) component obtained as a reaction product after reacting the (α) organic polyisocyanate compound having 3 or more and 5 or less functional groups and having a number average molecular weight of 2,000 or less as described above is easier to disperse into the gaps of the organic fiber polymer chain.

The (β) compound having 2 or more and 4 or less active hydrogen groups and having a number average molecular weight of 5,000 or less is not particularly limited. Specific examples thereof include compounds selected from the group consisting of the following (i) to (vii),
(i) polyhydric alcohols having 2 or more and 4 or less hydroxyl groups and having a number average molecular weight of 5,000 or less,
(ii) multivalent amines having 2 or more and 4 or less primary and/or secondary amino groups and having a number average molecular weight of 5,000 or less,
(iii) amino alcohols having 2 or more and 4 or less primary and/or secondary amino groups and hydroxyl groups and having a number average molecular weight of 5,000 or less,
(iv) polyester polyols having 2 or more and 4 or less hydroxyl groups and having a number average molecular weight of 5,000 or less,
(v) polybutadiene polyols having 2 or more and 4 or less hydroxyl groups and having a number average molecular weight of 5,000 or less, and copolymers thereof with other vinyl monomers,
(vi) polychloroprene polyols having 2 or more and 4 or less hydroxyl groups and having a number average molecular weight of 5,000 or less, and copolymers thereof with other vinyl monomers, and
(vii) polyether polyols having 2 or more and 4 or less hydroxyl groups and having a number average molecular weight of 5,000 or less,
which is multivalent amine, C2-C4 alkylene oxide heavy adduct of polyhydric phenol and amino alcohols, C2-C4 alkylene oxide heavy adduct of C3 or higher polyhydric alcohols, C2-C4 alkylene oxide copolymer, or C3-C4 alkylene oxide polymer.

For the (H-2) component, the active hydrogen group refers to a group containing hydrogen that becomes active hydrogen (atomic hydrogen (hydrogen radical) and hydride ion (hydride)) when placed under suitable conditions. Examples of the active hydrogen group include an amino group and a hydroxyl group.

The compound having at least one active hydrogen group and at least one anionic hydrophilic group of the "(δ) compound having at least one active hydrogen group and at least one anionic, cationic, or nonionic hydrophilic group" is not particularly limited. Examples thereof include aminosulfonic acids such as taurine, N-methyltaurine, N-butyltaurine and sulfanilic acid, and aminocarboxylic acids such as glycine and alanine.

A method of synthesizing the (H-2) component by mixing and reacting the above-described (α), (β), (γ) and (δ) is not particularly limited, and a known method such as the method described in JP S63-51474 A may be used.

### <<Another preferred embodiment of (H-2) aqueous urethane compound having a (thermal dissociative blocked) isocyanate group>>

Another preferred embodiment of the (H-2) component is a reaction product obtained by mixing (α), (β), (γ), (δ) and (ε) at a specified mixing ratio and reacting them, where (α) is an organic polyisocyanate compound having 3 or more and 5 or less functional groups and having a number average molecular weight of 2,000 or less, (β) is a compound having 2 or more and 4 or less active hydrogen groups and having a number average molecular weight of 5,000 or less, (γ) is a thermal dissociative blocking agent, (δ) is a compound having at least one active hydrogen group and at least one anionic, cationic, or nonionic hydrophilic group, and (ε) is a compound containing an active hydrogen group other than (α), (β), (γ) and (δ), and when the molecular weight of the isocyanate group (-NCO) is 42, the composition ratio of the (thermal dissociative blocked) isocyanate group in the reaction product is 0.5% by mass or more and 11% by mass or less. Here, the mixing ratio of (α) is 40% by mass or more and less than 85% by mass, the mixing ratio of (β) is 5% by mass or more and 35% by mass or less, the mixing ratio of (γ) is 5% by mass or more and 35% by mass or less, the mixing ratio of (δ) is 5% by mass or more and 35% by mass or less, and the mixing ratio of (ε) is more than 0% by mass and 45% by mass or less with respect to the total amount of (α), (β), (γ), (δ) and (ε). In this case, the (H-2) component has both a (thermal dissociative blocked) isocyanate group moiety and a hydrophilic moiety having a hydrophilic group, so that the self-water solubility of the urethane compound is increased.

As used herein, the (α) organic polyisocyanate compound having 3 or more and 5 or less functional groups and having a number average molecular weight of 2,000 or less, the (β) compound having 2 or more and 4 or less active hydrogen groups and having a number average molecular weight of 5,000 or less, the (γ) thermal dissociative blocking agent, and the (δ) compound having at least one active hydrogen group and at least one anionic, cationic, or nonionic hydrophilic group, except for the mixing ratio, are as described in the above <<Preferred embodiment of (H-2) aqueous urethane compound having a (thermal dissociative blocked) isocyanate group>>.

A method of synthesizing the (H-2) component by mixing and reacting the above-described (α), (β), (γ), (δ) and (ε) is not particularly limited, and a known method such as the method described in JP S63-51474 A may be used.

### «Yet another preferred embodiment of (H-2) aqueous urethane compound having a (thermal dissociative blocked) isocyanate group»

Yet another preferred embodiment of the (H-2) component is represented by the following general formula (1), 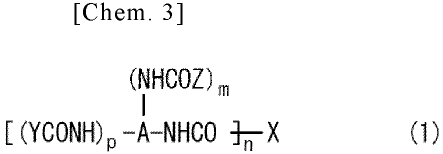 [where
A is a residue of an organic polyisocyanate compound from which an active hydrogen group has been eliminated,
X is a residue of a polyol compound having 2 or more and 4 or less hydroxyl groups and having a number average molecular weight of 5,000 or less from which an active hydrogen group has been eliminated,
Y is a residue of a thermal dissociative blocking agent from which an active hydrogen group has been eliminated,
Z is a residue of a compound having at least one active hydrogen group and at least one salt-producing group or hydrophilic polyether chain, from which an active hydrogen group has been eliminated,
n is an integer of 2 or more and 4 or less, and
p + m is an integer of 2 or more and 4 or less (m ≥ 0.25)]. This case provides even better adhesion between an organic fiber and a coated rubber composition when the adhesive composition is used on organic fibers. In this case, the (H-2) component has both a (thermal dissociative blocked) isocyanate group moiety and a hydrophilic moiety having a hydrophilic group, so that the self-water solubility of the urethane compound is increased.

In the formula (1), the organic polyisocyanate compound of A, which is a residue of an organic polyisocyanate compound from which an active hydrogen group has been eliminated, preferably contains an aromatic ring. In this case, the (H-2) component is easier to disperse into the gaps of the organic fiber polymer chain.

Specific examples thereof include, but are not limited to, methylenediphenyl polyisocyanate and polyphenylene polymethylene polyisocyanate. Polyphenylene polymethylene polyisocyanate having a number average molecular weight of 6,000 or less is preferable, and polyphenylene polymethylene polyisocyanate having a number average molecular weight of 4,000 or less is particularly preferable.

In the formula (1), the polyol compound having 2 or more and 4 or less hydroxyl groups and having a number average molecular weight of 5,000 or less of X, which is a residue of a polyol compound having 2 or more and 4 or less hydroxyl groups and having a number average molecular weight of 5,000 or less from which an active hydrogen group has been eliminated, is not particularly limited. Specific examples thereof include compounds selected from the group consisting of the following (i) to (vi),
(i) polyhydric alcohols having 2 or more and 4 or less hydroxyl groups and having a number average molecular weight of 5,000 or less,
(ii) amino alcohols having 2 or more and 4 or less primary and/or secondary amino groups and hydroxyl groups and having a number average molecular weight of 5,000 or less,
(iii) polyester polyols having 2 or more and 4 or less hydroxyl groups and having a number average molecular weight of 5,000 or less,
(iv) polybutadiene polyols having 2 or more and 4 or less hydroxyl groups and having a number average molecular weight of 5,000 or less, and copolymers thereof with other vinyl monomers,
(v) polychloroprene polyols having 2 or more and 4 or less hydroxyl groups and having a number average molecular weight of 5,000 or less, and copolymers thereof with other vinyl monomers, and
(vi) polyether polyols having 2 or more and 4 or less hydroxyl groups and having a number average molecular weight of 5,000 or less,
which is multivalent amine, C2-C4 alkylene oxide heavy adduct of polyhydric phenol and amino alcohols, C2-C4 alkylene oxide heavy adduct of C3 or higher polyhydric alcohols, C2-C4 alkylene oxide copolymer, or C3-C4 alkylene oxide polymer.

The (H-2) component is not particularly limited, and commercially available products such as ELASTRON BN27, BN77, and BN11 manufactured by DKS Co. Ltd. can be used, among which ELASTRON BN77 is preferred.

### <Method of producing adhesive composition>

The adhesive composition of the present disclosure contains (A) rubber latex having unsaturated diene, (B) a polyvalent metal salt, and at least one component selected from the group consisting of the following (C) to (F), and it preferably further contains at least one component selected from the group consisting of the following (G) to (H).
(C) an aqueous component having a plurality of phenolic hydroxy groups in molecule
(D) a water-soluble component containing an amide bond structure
(E) an amine compound
(F) polyvinyl alcohol
(G) an epoxide compound
(H) an aqueous compound having a (thermal dissociative blocked) isocyanate group

When producing the adhesive composition, the (A) rubber latex having unsaturated diene, (B) polyvalent metal salt, (C) aqueous component having a plurality of phenolic hydroxy groups in molecule, (D) water-soluble component containing an amide bond structure, (E) amine compound, and (F) polyvinyl alcohol can be mixed in any order.

Although not particularly limited, the preferred order of adding the components to be contained in the adhesive composition is the (B) polyvalent metal salt, (C) aqueous component having a plurality of phenolic hydroxy groups in molecule, (D) water-soluble component containing an amide bond structure, (E) amine compound, (F) polyvinyl alcohol, (A) rubber latex having unsaturated diene, (G) epoxide compound, and (H) aqueous compound having a (thermal dissociative blocked) isocyanate group.

The reason is as follows. When the (B) polyvalent metal salt is mixed with the components (C) to (F), a polyion complex is formed, and it is easier to fix to the anionic group on the surface of an organic fiber as an adherend and the anionic group of an emulsifier on the surface of rubber latex.

Although not particularly limited, in one embodiment of the adhesive composition of the present disclosure where the components to be contained in the adhesive composition include the (B) polyvalent metal salt and (C) aqueous component having a plurality of phenolic hydroxy groups in molecule, it is preferable to dissolve the (B) polyvalent metal salt in ion-exchanged water or the like and dilute the (B) polyvalent metal salt preferably to a solid content concentration of 20% by mass or less, similarly dilute the (C) aqueous component having a plurality of phenolic hydroxy groups in molecule with ion-exchanged water or the like, add the diluted (C) to the diluted (B), stir the mixture at room temperature, and allowed it to stand for, although not particularly limited, eight hours or longer.

The reason is as follows. When the (B) polyvalent metal salt is mixed with the (C) aqueous component having a plurality of phenolic hydroxy groups in molecule, the (C) component is oxidized and the pH of the solution changes due to the action of polyvalent metal ions such as copper and iron, and by allowing the formed polyion complex to stand until it stabilizes, it is easier to fix to the anionic group on the organic fiber surface and the anionic group of the emulsifier on the rubber latex surface.

In the adhesive composition of the present disclosure, the mixing mass ratio [(A): total of (C) to (F)] (in terms of solid content) of the (A) rubber latex having unsaturated diene to the aqueous components of (C) to (F) is not particularly limited, but it is preferably in a range of 100: 0.1 to 100: 30 and more preferably in a range of 100: 0.2 to 100: 25.

The reason is as follows. When the mixing mass ratio is 100: 0.1 or more (when the ratio value is 1000 or less), a film of microcapsule of the aqueous components of (C) to (F) can be formed around the (A) rubber latex having unsaturated diene as a core, and it is possible to obtain an adhesive layer with sufficient strength. Further, when the mixing mass ratio is 100: 30 or less (when the ratio value is 3.3 or more), a film of microcapsule of the aqueous components of (C) to (F) formed around the (A) rubber latex having unsaturated diene as a core is not too thick, so that when a coated rubber composition, which is an adherend of an organic fiber, and the adhesive composition are co-vulcanized and adhered to each other, the coated rubber composition as the adherend and the (A) rubber latex having unsaturated diene are compatible with each other. As a result, the initial process of adhesion between the coated rubber composition as the adherend and the adhesive composition progresses smoothly.

When mixing the (A) rubber latex having unsaturated diene and the aqueous components of (C) to (F), a known water-soluble material that can strengthen the film of the aqueous components of (C) to (F) can be used in combination in common coacervate. For example, gum arabic, carrageenan, CMCs, organic salts, or an electrolyte material containing inorganic salts other than the (B) polyvalent metal salt, such as salts with monovalent cations like sodium chloride, potassium chloride and ammonium chloride, and salts with anions like sulfates, phosphates, carbonates and acetates, can be used. Further, a liquid material that is water-soluble liquid and in which a film-forming material is less soluble than water, such as an alcohols like ethanol or propanol, or water-soluble polymers like an isobutylene-maleic anhydride ring-opening copolymer salt, can also be used.

In the adhesive composition of the present disclosure, the mixing mass ratio [(B): total of (C) to (F)] (in terms of solid content) of the (B) polyvalent metal salt to the aqueous components of (C) to (F) is not particularly limited, but it is preferably in a range of 0.001: 100 to 40: 100, more preferably in a range of 0.01: 100 to 35: 100, and still more preferably in a range of 0.1: 100 to 30: 100.

The reason is as follows. When the mixing mass ratio is 0.001: 100 or more (when the ratio value is 0.00001 or more), due to the effect of the polyion complex of the (B) polyvalent metal salt and the aqueous components of (C) to (F), charge interactions within a film of microcapsule of the aqueous components of (C) to (F) can be strengthened, and an adhesive layer with sufficient strength can be obtained. Further, when the mixing mass ratio is 40: 100 or less (when the ratio value is 0.4 or less), it is possible to prevent an aqueous solution of the adhesive composition from thickening or gelling due to excessive cohesive force of the components (C) to (F) because of the (B) polyvalent metal salt, and the workability of coating organic fibers is improved.

Although not particularly limited, in one embodiment of the adhesive composition of the present disclosure where the components to be contained in the adhesive composition include the (G) epoxide compound, the mixing mass ratio [(G): total solid mass of the adhesive composition] (in terms of solid content) of the (G) epoxide compound to the mass of all components of the adhesive composition of the present disclosure is preferably in a range of 0.1: 100 to 20: 100, more preferably in a range of 0.5: 100 to 10: 100, and still more preferably in a range of 0.7: 100 to 5: 100.

The reason is as follows. When the mixing mass ratio is 0.1: 100 or more (when the ratio value is 0.001 or more), the effect of the (G) epoxide compound as a cross-linking agent in the adhesive composition can be easily obtained, and the cross-linking agent can maintain sufficient fracture resistance of the adhesive layer and prevent deterioration of adhesiveness under strain. Further, when the mixing mass ratio is 10: 100 or less (when the ratio value is 0.1 or less), hardening of the adhesive composition due to excessive cross-linking is reduced, the mobility of the adhesive composition layer can be maintained under strain input when a tire runs, and deterioration of strength of an adhesive layer of organic fiber or an organic fiber cord coated with the adhesive composition under strain can be suppressed, which is preferable.

Although not particularly limited, in one embodiment of the adhesive composition of the present disclosure where the components to be contained in the adhesive composition include the (H) aqueous compound having a (thermal dissociative blocked) isocyanate group, the mixing mass ratio [(H): total solid mass of the adhesive composition] (in terms of solid content) of the (H) aqueous compound having a (thermal dissociative blocked) isocyanate group to the mass of all components of the adhesive composition of the present disclosure is preferably in a range of 0.1: 100 to 70: 100, more preferably in a range of 1: 100 to 60: 100, and still more preferably in a range of 5: 100 to 50: 100.

The reason is as follows. When the mixing mass ratio is 0.1: 100 or more (when the ratio value is 0.001 or more), the effect of the (H) aqueous compound having a (thermal dissociative blocked) isocyanate group as a cross-linking agent in the adhesive composition can be easily obtained, and the cross-linking agent can maintain sufficient fracture resistance of the adhesive layer and prevent deterioration of adhesiveness under strain. Further, when the mixing mass ratio is 70: 100 or less (when the ratio value is 0.7 or less), hardening of the adhesive composition due to excessive cross-linking is reduced, the mobility of the adhesive composition layer can be maintained under strain input when a tire runs, and deterioration of the strength of an adhesive layer of organic fiber or an organic fiber cord coated with the adhesive composition under strain can be suppressed, which is preferable.

The components (A) to (H) of the adhesive composition of the present disclosure are preferably aqueous. In this case, water that causes less environmental pollution can be used as a solvent.

### [Organic fiber material]

By coating the adhesive composition with the composition described above on the surface of an organic fiber, such as an organic fiber made of nylon resin, polyester resin, aromatic polyamide resin, acrylic resin, or the like, and performing moderate heat treatment, an adhesive layer of the adhesive composition is coated on the surface of the organic fiber (resin base material), thereby obtaining an organic fiber material that has been subjected to adhesive treatment.

The organic fiber material of the present disclosure includes an organic fiber and an adhesive layer that coats the surface of the organic fiber, where the adhesive layer is made of the adhesive composition described above. As a result, it is possible to obtain an organic fiber material with excellent durability while ensuring environmental friendliness and workability.

The material of the organic fiber is particularly preferably nylon resin, polyester resin, aromatic polyamide resin, or acrylic resin. Among the above, the material of the organic fiber is preferably polyester resin, and particularly preferably nylon resin. Organic fibers made of nylon resin have anionic groups due to oxidation of the fiber surface or hydrolysis of amide bonds in polymers or the like, so the effect of cationic charge of the (B) polyvalent metal salt increases, and the adhesiveness is further improved.

The method of coating the organic fiber surface with the adhesive composition may be a method of immersing the organic fiber (especially organic fiber cord) in the adhesive composition, a method of applying the adhesive composition with a brush or the like, a method of spraying the adhesive composition, or the like, and an appropriate method may be used as needed. The method of coating the organic fiber surface with the adhesive composition is not particularly limited. However, when the organic fiber surface is coated with the adhesive composition, the adhesive composition is preferably dissolved in various solvents to reduce the viscosity, because the coating (immersing, applying, spraying, and the like) is facilitated in this case. Further, it is environmentally preferable that the solvent for reducing the viscosity of the adhesive composition mainly consists of water.

The solution concentration of the adhesive composition impregnated in the organic fiber is not particularly limited. However, it is preferably, in terms of solid content, 5.0% by mass or more and 25.0% by mass or less, and more preferably 7.5% by mass or more and 20.0% by mass or less with respect to the mass of the organic fiber.

The thickness of an adhesive layer of the adhesive composition is not particularly limited, but it is preferably 50 µm or less, and it is more preferably 0.5 µm or more and 30 µm or less.

Especially when applying the organic fiber-rubber composite of the present disclosure to a tire, if the amount of the adhesive composition coated by the adhesive treatment is large, the adhesive durability under tire rolling tends to decrease. The reason is as follows. Due to the high rigidity of a fiber material, the adhesive composition at the interface of an adhered fiber material has relatively small deformation because the fiber material bears the stress due to strain. However, the deformation due to strain increases as the distance from the interface increases. Because the adhesive composition contains a large amount of thermosetting condensate as compared with the adhered rubber material, it is hard and brittle. As a result, the adhesive fatigue under repeated strain tends to increase. Therefore, the average thickness of the adhesive composition layer is preferably 50 µm or less. It is more preferably 0.5 µm or more and 30 µm or less.

The organic fiber is preferably an organic fiber cord obtained by twisting a plurality of filaments. When the organic fiber is an organic fiber cord obtained by twisting a plurality of filaments, it is suitable for reinforcing rubber articles such as tires and conveyor belts. When the organic fiber is an organic fiber cord, in the organic fiber material, the dry mass of the adhesive layer is preferably 0.5% by mass to 6.0% by mass of the mass of the organic fiber cord. By setting the dry mass of the adhesive layer within this range, suitable adhesiveness can be secured. The following describes the organic fiber cord in detail.

The organic fiber coated with the adhesive composition can be subjected to drying, heat treatment, and other treatment in the same manner as the organic fiber material described above.

The organic fiber material in which the surface of an organic fiber is coated with the adhesive composition is preferably, for example, dried at a temperature of 100°C to 210°C and then subjected to heat treatment. The heat treatment is preferably performed at a temperature equal to or higher than the glass transition temperature of the polymer of the organic fiber (resin base material), preferably a temperature of [the melting temperature of the polymer - 70°C] or higher and [the melting temperature of the polymer - 10°C] or lower. The reason this case is preferable is as follows. When the temperature is lower than the glass transition temperature of the polymer, the molecular mobility of the polymer is poor, and the adhesion-promoting components in the adhesive composition cannot interact with the polymer sufficiently. As a result, the bonding strength between the adhesive composition and the organic fiber cannot be obtained. The organic fiber may be pretreated by electron beam, microwave, corona discharge, plasma treatment, or the like.

### [Rubber article]

The adhesive composition of the present disclosure described above can be suitably used for reinforcing various rubber articles. A rubber article of the present disclosure is reinforced by the organic fiber material described above. As a result, it is possible to obtain a rubber article with excellent durability while ensuring environmental friendliness and workability. In addition to a tire, the rubber article of the present disclosure may be a conveyor belt, a belt, a hose, an air spring, or the like.

### [Organic fiber-rubber composite]

An organic fiber-rubber composite of the present disclosure is a composite of organic fiber and rubber, where the organic fiber is coated with the adhesive composition described above. In this case, good adhesiveness can be obtained without using resorcin, and an organic fiber-rubber composite with good environmental friendliness and workability can be obtained. The adhesive composition of the present disclosure is particularly excellent in adhesion between an organic fiber such as an organic fiber cord and a coated rubber composition.

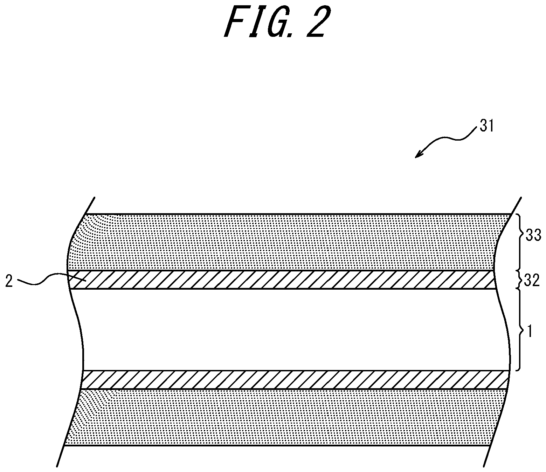

Next, the organic fiber-rubber composite of the present disclosure will be described in detail with reference to FIG. 2.

FIG. 2 schematically illustrates a cross section of an organic fiber cord-rubber composite, which is an example of the organic fiber-rubber composite of the present disclosure. In an organic fiber-rubber composite 31 illustrated in FIG. 2, the outer surface in the outer diameter direction of an organic fiber cord 1 is coated with an adhesive layer 32 formed by an adhesive composition 2 of the present disclosure. The organic fiber cord 1 is further adhered to a coated rubber composition 33 located on the outer side in the outer diameter direction via the adhesive 32 of the adhesive composition 2 to form the organic fiber-rubber composite 31 of the present disclosure.

In addition to the organic fiber cord-rubber composite, a reinforcing material for rubber articles using the adhesive composition of the present disclosure may be a short fiber, a non-woven fabric, or the like.

### <Organic fiber cord>

An organic fiber cord, which is an example of the organic fiber, is used to supplement the strength of a rubber article such as a tire. When the organic fiber cord is used as a reinforcing material, spun organic fiber yarn is first twisted to obtain an organic fiber cord. Then, the organic fiber cord is embedded in rubber that coats the organic fiber cord using an adhesive composition, and vulcanization is performed to adhere them to form an organic fiber-rubber composite. The organic fiber-rubber composite can be used as a reinforcing member of a rubber article such as a tire.

The material of the organic fiber is not particularly limited, and fiber materials typified by nylon resin fiber (aliphatic polyamide fiber) such as polyester fiber, 6-nylon, 6,6-nylon and 4,6-nylon, protein fiber such as artificial fibroin fiber, polyketone fiber, aromatic polyamide fiber typified by polynonamethylene terephthalamide and paraphenylene terephthalamide, acrylic fiber, carbon fiber, and cellulose fiber such as rayon and lyocell can be used. Among the above, it is preferable to use polyester, 6-nylon, and 6,6-nylon, and it is particularly preferable to use 6,6-nylon.

The material of the polyamide fiber is a polymer having an amide bond in the main chain, and more specifically, it is one where 80% or more of the bonding mode of the repeating units in the main chain is an amide bonding mode. Examples of the polyamide include, but are not limited to, dicarboxylic acids such as adipic acid, sebacic acid and terephthalic acid, and those obtained by condensation of diamines, such as hexaethylenediamine, nonanediamine, methylpentadiamine, p-phenylenediamine and m-phenylenediamine, through an amide bonding reaction. The most typical aliphatic polyamide is 6,6-nylon.

The organic fiber cord is preferably an organic fiber cord obtained by twisting a plurality of single fiber filaments, especially for the purpose of reinforcing rubber articles such as tires or conveyor belts. Further, the organic fiber cord is preferably an organic fiber cord obtained by twisting second twisted single fiber filaments and first twisted single fiber filaments. In this case, the fiber thickness of the organic fiber cord is preferably in a range of 100 dtex or more and 5000 dtex or less. Regarding the number of twists (times/10 cm), the number of first twists is preferably 10 times/10 cm to 50 times/10 cm in the tire of the present disclosure, and the number of second twists is preferably 10 times/10 cm to 50 times/10 cm in the tire of the present disclosure. It is more suitable for reinforcing rubber articles such as tires and conveyor belts in a case where the organic fiber cord is made by first twisting and second twisting, the fiber thickness of the cord obtained by twisting is 100 dtex to 5000 dtex, and the number of twists is 10 times/10 cm to 50 times/10 cm for first twists and 10 times/10 cm to 50 times/10 cm for second twists.

In the present disclosure, it is preferably an organic fiber-rubber composite where the organic fiber is a 66-nylon tire cord having a twist structure of 1400 dtex/2, a second twist number of 39 times/10 cm and a first twist number of 39 times/10 cm, and the adhesive composition is adhered to the tire cord.

### <<Coated rubber composition of organic fiber-rubber composite>>

The coated rubber composition of the organic fiber-rubber composite of the present disclosure preferably contains a rubber component and various compounding agents usually used in the rubber industry. The rubber component is not particularly limited, and examples thereof include natural rubber, conjugated diene-based synthetic rubber such as polyisoprene rubber (IR), polybutadiene rubber (BR), styrene-butadiene copolymer rubber (SBR), acrylonitrile-butadiene rubber (NBR), chloroprene rubber (CR) and butyl rubber (IIR), and ethylene-propylene copolymer rubber (EPM), ethylene-propylene-diene copolymer rubber (EPDM), and polysiloxane rubber. Among the above, natural rubber and conjugated diene-based synthetic rubber are preferable. These rubber components may be used alone or in combination of two or more.

### <<Method of producing organic fiber-rubber composite>>

The organic fiber-rubber composite of the present disclosure can be produced by coating an organic fiber, such as an organic fiber cord, with the adhesive composition of the present disclosure to form an adhesive layer, and co-vulcanizing and adhering the (A) rubber latex having unsaturated diene in the adhesive composition and the rubber component in the coated rubber composition that is an adherend of the organic fiber.

Finally, for the organic fiber coated with the adhesive composition, the (A) rubber latex having unsaturated diene in the adhesive composition and the rubber component in the coated rubber composition that is an adherend of the organic fiber are co-vulcanized and adhered to each other.

In the co-vulcanization of the rubber component in the coated rubber composition, for example, sulfur, tylalium polysulfide compounds such as tetramethyltylalium disulfide and dipentamethylenetylalium tetrasulfide, organic vulcanizing agents such as 4,4-dithiomorpholin, p-quinone dioxime, p,p'-dibenzoquinone dioxime, and cyclic sulfur imide, and the like may be used. Among the above, it is preferable to use sulfur. Further, various compounding agents such as a filler like carbon black, silica and aluminum hydroxide commonly used in the rubber industry, a vulcanization accelerator, an age resistor, and a softener may be appropriately added to the rubber component in the coated rubber composition.

Needless to say, the adhesive composition of the present disclosure can obtain an adhesive effect even in an adhesive method where a vulcanizing agent contained in an adherend of a synthetic organic fiber material such as an organic fiber and/or an adherend of a coated rubber composition is transferred to the adhesive composition, and the adhesive composition is cross-linked by the transferred vulcanizing agent.

### <Tire>

The tire of the present disclosure uses the organic fiber-rubber composite described above. As a result, good adhesiveness can be obtained without using resorcin, and a tire with good environmental friendliness and productivity can be obtained.

In the tire of the present disclosure, the organic fiber-rubber composite can be used, for example, as a carcass, a belt, a belt reinforcing layer, and a reinforcing layer around a belt such as a flipper.

In accordance with the type of tire to be used, the tire of the present disclosure may be obtained by first shaping a tire using an unvulcanized rubber composition and then vulcanizing the tire, or by first shaping a tire using semi-vulcanized rubber yielded by a preliminary vulcanization process and then fully vulcanizing the tire. For the tire of the present disclosure, an organic fiber cord or the like that has been treated with the above-described adhesive composition can be used in any part of the tire, and other members are not particularly limited and may be known members. The tire of the present disclosure is preferably a pneumatic tire. The pneumatic tire may be filled with ordinary air or air with an adjusted partial pressure of oxygen, or may also be filled with an inert gas such as nitrogen, argon, or helium.

The adhesive composition, organic fiber material, and organic fiber-rubber composite of the present disclosure described above can be applied to, in addition to the tire, all rubber articles such as a conveyor belt, a belt, a hose, and an air spring.

### EXAMPLES

The following describes the present disclosure in more detail with reference to examples, but the present disclosure is not limited to the following examples.

### <(A) Rubber latex having unsaturated diene>

In the following Comparative Examples 1 to 14 and Examples 1 to 29, a vinylpyridine-styrene-butadiene copolymer latex was prepared and used in accordance with Comparative Example 1 described in JP H09-78045 A and used as the (A) rubber latex having unsaturated diene as follows.

In a nitrogen-substituted autoclave having a capacity of 5 liters, 130 parts by mass of deionized water and 4.0 parts by mass of potassium rosinate as an emulsifier were charged and dissolved. A monomer mixture having a composition of 15 parts by mass of vinylpyridine monomer, 15 parts by mass of styrene and 70 parts by mass of butadiene, and 0.60 parts by mass of t-dodecyl mercaptan as a chain transfer agent were added to this and emulsified. Next, the temperature was raised to 50°C, 0.5 parts by mass of potassium persulfate as a polymerization initiator was added, and polymerization was started. After the reaction rate of the monomer mixture reached 90%, 0.1 parts by mass of hydroquinone was added to terminate the polymerization. Next, unreacted monomers were removed under reduced pressure to obtain a vinylpyridine-styrene-butadiene copolymer latex having a solid content concentration of 41% by mass.

### <(B) Polyvalent metal salt>

In the following Comparative Examples 2 to 4 and Examples, the following water-soluble polyvalent metal salts (B-1, B-2, B-3) were used as the (B) polyvalent metal salt, and their aqueous solutions were used to prepare adhesive compositions.

Here, the polyvalent metal salt (B-1) was product name "Copper (II) gluconate" manufactured by Tokyo Chemical Industry Co., Ltd. (TCI), the polyvalent metal salt (B-2) was product name "Copper (II) acetate monohydrate" manufactured by KANTO CHEMICAL CO.,INC., and the polyvalent metal salt (B-3) was product name "Iron (II) chloride tetrahydrate" manufactured by NACALAI TESQUE, INC. They were dissolved in deionized water by stirring to obtain a solid content concentration of 0.5% by mass, and the aqueous solutions were used to prepare adhesive compositions.

### <(C) Aqueous component having a plurality of phenolic hydroxy groups in molecule>

In the following Comparative Examples 5 to 8 and Examples 1 to 4 and 13 to 29, a water-soluble polyphenol (C-1), and an aqueous compound having a structure in which aromatics are bonded with methylene (C-2) were used as the (C) aqueous component having a plurality of phenolic hydroxy groups in molecule.

Here, the water-soluble polyphenol (C-1) was product name "Lignin (alkali)" manufactured by Tokyo Chemical Industry Co., Ltd. (TCI) that was (C-1-1) a partially desulfonated lignin sulfonate with a reduced degree of sulfonation, product name "Lignin, alkali" manufactured by Sigma-Aldrich Co. LLC that was (C-1-2) kraft lignin, or product name "Mimosa" manufactured by Kawamura Corporation that was (C-1-3) condensed tannin. These solid powder polyphenols were dissolved in deionized water to obtain aqueous solutions with a solid content concentration of 10% by mass, and the aqueous solutions were used to prepare adhesive compositions.

Further, product name "DEMOL RN-L" (solid content concentration 41% by mass) manufactured by Kao Corporation that was (C-2-1) β-naphthalenesulfonic acid formaldehyde condensate sodium salt was used as it was as the (C-2) aqueous compound having a structure in which aromatics are bonded to methylene.

### <(D) Water-soluble component containing an amide bond structure>

In the following Comparative Examples 9 to 12 and Examples 5 to 10, 13 to 22, and 25 to 28, a water-soluble component containing a peptide structure (D-1), and a water-soluble compound containing an acrylamide structure (D-2) were used as the (D) water-soluble component containing an amide bond structure.

Here, the water-soluble component containing a peptide structure (D-1) was product name "Promis HYDOROMILK" (solid content concentration 30% by mass) manufactured by SEIWA KASEI CO., LTD. that was (D-1-1) hydrolyzed polypeptide derived from milk, or product name "High Grade Gelatin" (solid powder) manufactured by FUJIFILM Wako Pure Chemical Corporation that was (D-1-2) pigskin gelatin. Their aqueous solutions were used to prepare adhesive compositions.

Regarding the (D-1-2) pigskin gelatin, an aqueous solution with a solid content concentration of 5% by mass using deionized water was prepared and used, but the pigskin gelatin could be dissolved by adding it to deionized water heated to 80°C and, if necessary, performing stirring.

Further, the water-soluble compound containing an acrylamide structure (D-2) was product name "DS4399" (solid content concentration 20% aqueous solution) manufactured by SEIKO PMC CORPORATION that was (D-2-1) nonionic polyacrylamide, or product name "DS4433" (solid content concentration 20% aqueous solution) manufactured by SEIKO PMC CORPORATION that was (D-2-2) amphoteric polyacrylamide with cationic and anionic groups. They were diluted with deionized water to obtain aqueous solutions with a solid content concentration of 5% by mass, and the aqueous solutions were used to prepare adhesive compositions.

### <(E) Amine compound>

In the following Comparative Example 13 and Examples 11, 23 and 29, reagent name "Polyethyleneimine (average molecular weight approximately 600)" manufactured by Wako Pure Chemical Corporation was used as the (E) amine compound. It was diluted with deionized water to obtain an aqueous solution with a solid content concentration of 10% by mass, and the aqueous solution was used to prepare adhesive compositions.

### <(F) Polyvinyl alcohol>

In the following Comparative Example 14 and Examples 12 and 24, product name "Gohsenx Z-410" (degree of saponification 97.5 mol% to 99.5 mol%) manufactured by Mitsubishi Chemical Corporation that was (F-1) acetoacetyl group-modified polyvinyl alcohol was used as the (F) polyvinyl alcohol, and a 5% by mass aqueous solution diluted with deionized water was obtained in the following manner.

First, 50.0 g of the (F-1) acetoacetyl group-modified polyvinyl alcohol was gradually added to 950.0 g of deionized water while stirring the deionized water at room temperature. After stirring the solution at room temperature for 10 minutes, the solution was heated until the internal temperature was 85°C to 90°C, and stirring was continued at that temperature for two hours. After confirming the dissolution of the acetoacetyl group-modified polyvinyl alcohol, the acetoacetyl group-modified polyvinyl alcohol aqueous solution was cooled to room temperature. Next, the dissolved polyvinyl alcohol aqueous solution was filtered through a 1 µm filter, deionized water was added for the moisture evaporated by heating and stirring to obtain an acetoacetyl group-modified polyvinyl alcohol aqueous solution with a solid content concentration of 5% by mass, and the aqueous solution was used to prepare adhesive compositions.

### <(G) Epoxide compound>

In the following Example 26, product name "DENACOL EX-614B" (epoxy equivalent: 173, liquid) manufactured by Nagase ChemteX Corporation that was sorbitol/polyglycidyl ether was used as the (G) epoxide compound. It was diluted with deionized water to obtain an aqueous solution with a solid content concentration of 10% by mass, and the aqueous solution was used to prepare adhesive compositions.

### <(H) Aqueous compound having a (thermal dissociative blocked) isocyanate group>

In the following Examples 25 and 27 to 29, "DM-6400" (blocking agent thermal dissociation temperature: about 130°C, solid content concentration: 40% by mass) manufactured by Meisei Chemical Works, Ltd. that was (H-1) a methyl ethyl ketoxime block-diphenylmethane diisocyanate compound, or product name "ELASTRON BN77" manufactured by DKS Co. Ltd. that was (H-2) an aqueous compound having a (thermal dissociative blocked) isocyanate group was used as it was as the (H) aqueous compound having a (thermal dissociative blocked) isocyanate group.

### <<Preparation of latex adhesive composition (Comparative Example 1)»

The (A) rubber latex and water were blended (wet blending) as listed in Table 2 and mixed where the amount was adjusted to obtain a solid content concentration of 16% by mass, and then the mixture was sufficiently stirred to obtain a latex adhesive composition (Comparative Example 1).

### <<Preparation of polyvalent metal salt-latex adhesive composition (Comparative Examples 2 to 4)>>

The (A) rubber latex having unsaturated diene and the (B-1 to B-3) polyvalent metal salts were blended (wet blending) as listed in Table 2 and mixed where the amount was adjusted with water to obtain an adhesive composition solid content concentration of 16% by mass, and then the mixtures were sufficiently stirred to obtain polyvalent metal salt-latex adhesive compositions (Comparative Examples 2 to 4).

### <<Preparation of aqueous component having a plurality of phenolic hydroxy groups in molecule-latex adhesive composition (Comparative Examples 5 to 8)»

The (A) rubber latex having unsaturated diene and the (C-1 to C-4) aqueous components having a plurality of phenolic hydroxy groups in molecule were blended (wet blending) as listed in Table 2 and mixed where the amount was adjusted with water to obtain an adhesive composition solid content concentration of 16% by mass, and then the mixtures were sufficiently stirred to obtain aqueous component having a plurality of phenolic hydroxy groups in molecule-latex adhesive compositions (Comparative Examples 5 to 8).

### <<Preparation of water-soluble component containing an amide bond structure-latex adhesive composition (Comparative Examples 9 to 12)»

The (A) rubber latex having unsaturated diene and the (D-1 to D-4) water-soluble components containing an amide bond structure were blended (wet blending) as listed in Table 2 and mixed where the amount was adjusted with water to obtain an adhesive composition solid content concentration of 16% by mass, and then the mixtures were sufficiently stirred to obtain water-soluble component containing an amide bond structure-latex adhesive compositions (Comparative Examples 9 to 12).

### <<Preparation of amine compound-latex adhesive composition (Comparative Example 13)»

The (A) rubber latex having unsaturated diene and the (E-1) amine compound were blended (wet blending) as listed in Table 2 and mixed where the amount was adjusted with water to obtain an adhesive composition solid content concentration of 16% by mass, and then the mixture was sufficiently stirred to obtain an aqueous component having a plurality of phenolic hydroxy groups in molecule-latex adhesive composition (Comparative Example 13).

### <<Preparation of polyvinyl alcohol-latex adhesive composition (Comparative Example 14)»

The (A) rubber latex having unsaturated diene and the (F-1) acetoacetyl group-modified polyvinyl alcohol were blended (wet blending) as listed in Table 2 and mixed where the amount was adjusted with water to obtain an adhesive composition solid content concentration of 16% by mass, and then the mixture was sufficiently stirred to obtain a latex-aqueous compound having polyvinyl alcohol adhesive composition (Comparative Example 14).

### <<Preparation of adhesive composition as one embodiment of the present disclosure (Examples 1 to 29)>>

As listed in Tables 3 to 5, each of predetermined water for dilution, (B) polyvalent metal salt (Examples 1 to 29), (C) aqueous component having a plurality of phenolic hydroxy groups in molecule (Examples 1 to 4 and 13 to 29), (D) water-soluble component containing an amide bond structure (Examples 5 to 10, 13 to 22, and 25 to 28), (E) amine compound (Examples 11, 23, and 29), (F) polyvinyl alcohol (Examples 12 and 24), (A) rubber latex having unsaturated diene(Examples 1 to 29), (G) epoxide compound (Example 26), and (H) aqueous compound having a (thermal dissociative blocked) isocyanate group (Examples 25 and 27 to 29) were blended (wet blending) in the stated order and mixed to obtain an adhesive composition solid content concentration of 16% by mass, and then the mixtures were sufficiently stirred to obtain adhesive compositions as one embodiment of the present disclosure (Examples 1 to 29).

### <Coating of tire cord with each adhesive composition>

Tire cords made of 66-nylon having a twist structure of 1400 dtex/2, a second twist number of 39 times/10 cm and a first twist number of 39 times/10 cm were used as organic fiber cords.

The tire cords were immersed in each of the adhesive compositions of Comparative Examples 1 to 14 and Examples 1 to 29, where the concentration of the adhesive composition impregnated in the tire cord was adjusted to 3.3% by mass with respect to the mass of the organic fiber cord.

Next, they were subjected to drying in a drying zone (160°C, 60 seconds), resin heat curing with tension applied (33 N/piece) in a hot zone (235°C, 60 seconds), and heat curing with the tension released in a normalizing zone (235°C, 60 seconds) in the stated order to obtain tire cords coated with each of the adhesive compositions of Comparative Examples 1 to 14 and Examples 1 to 29.

### <Preparation of tire cord-rubber composite>

The tire cords coated with each of the adhesive compositions of Comparative Examples 1 to 14 and Examples 1 to 29 were embedded in unvulcanized rubber compositions and co-vulcanization was performed at 160°C for 20 minutes. Rubber compositions containing natural rubber, styrene-butadiene rubber, carbon black, vulcanizing chemicals and the like were used as the unvulcanized rubber compositions for coating.

### <Evaluation of workability of adhesive composition>

The workability of the adhesive composition of each comparative example and example was evaluated as follows.

### «Evaluation of mechanical stability (solidification rate)»

The mechanical stability (solidification rate) of each adhesive composition was determined with a method using a Maron mechanical stability tester for copolymer latex composition described in JIS K6392-1995 (Maron stability tester No.2312-II, manufactured by KUMAGAI RIKI KOGYO Co., Ltd.).

In brief, each adhesive composition was subjected to shear strain for 10 minutes at a compression load of 10 kg and a rotation speed of 1000 r/min using the rotor of the Maron mechanical stability tester, and then the solidification rate % was evaluated by the following expression with the amount of formed solid product. The value was rounded off to the third decimal place. A smaller value indicates better mechanical stability. Solidification rate % = [(dry mass of formed solid product)/(solid content mass of adhesive liquid under test)] × 100

### «Evaluation of adhesion to drawing roller»

The tire cords, which were organic fiber cords, were continuously treated for 2000 m in immersion treatment machines that stored each adhesive composition. The amount of each adhesive composition adhered to the drawing roller was visually observed and evaluated in the following five levels.
Extra-large: a very large amount
Large: a large amount
Medium: a medium amount
Small: a small amount
Little: a very small amount

### <Evaluation of adhesiveness of adhesive composition>

The adhesiveness of the adhesive composition of each comparative example and example was evaluated as follows.

### «Evaluation of adhesive strength»

By pulling the tire cord-rubber composite obtained using each adhesive composition at a rate of 300 mm/min, the tire cord was peeled off from the tire cord-rubber composite, and the peeling resistance per tire cord was determined and used as the adhesive strength (N/piece).

### «Evaluation of adhesion state of coated rubber»

For the tire cord peeled off from the tire cord-rubber composite, the adhesion state of the coated rubber was visually observed and scored according to Table 1 below.

**[Table 1]**

| Score of adhesion state of coated rubber | Adhesion area ratio of coated rubber to tire cord (organic fiber cord) | State of cord filament |
|---|---|---|
| A+ | - | Filament is broken |
| A | 80% or more and 100% or less | Filament is not broken |
| B | 60% or more and less than 80% | Filament is not broken |
| C | 40% or more and less than 60% | Filament is not broken |
| D | 20% or more and less than 40% | Filament is not broken |
| E | 0% or more and less than 20%. | Filament is not broken |

### <Results of workability evaluation and adhesiveness evaluation of adhesive composition>

The following Tables 2 to 5 list the composition of the adhesive composition of each comparative example and example, and the workability evaluation and adhesiveness evaluation results thereof, respectively.

**[Table 2]**

| | Components | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 | Comparative Example 12 | Comparative Example 13 | Comparative Example 14 |
|---|---|---|---|---|---|---|---|---|---|---|---|---|---|---|---|---|
| Composition of solid component of adhesive composition (dry) (% by mass) | (A) Latex | Type | (A-1) | (A-1) | (A-1) | (A-1) | (A-1) | (A-1) | (A-1) | (A-1) | (A-1) | (A-1) | (A-1) | (A-1) | (A-1) | (A-1) |
| | | Content | 100.00 | 99.86 | 99.86 | 99.86 | 88.00 | 84.00 | 84.00 | 90.00 | 99.30 | 96.90 | 99.50 | 99.01 | 99.00 | 98.70 |
| | (B) Polyvalent metal salt | Type | - | (B- 1) | (B-2) | (B-3) | - | - | - | - | - | - | - | - | - | - |
| | | Content | - | 0.14 | 0.14 | 0.14 | - | - | - | - | - | - | - | - | - | - |
| | (C) Phenols | Type | - | - | - | - | (C-1-1) | (C-1-2) | (C-1-3) | (C-2-1) | - | - | - | - | - | - |
| | | Content | - | - | - | - | 12.0 | 16.0 | 16.0 | 10.0 | - | - | - | - | - | - |
| | (D) Amides | Type | - | - | - | - | - | - | - | - | (D-1-1) | (D-1-2) | (D-2-2) | (D-2-1) | - | - |
| | | Content | - | - | - | - | - | - | - | - | 0.70 | 3.10 | 0.50 | 0.99 | - | - |
| | (E) Amines | Type | - | - | - | - | - | - | - | - | - | - | - | - | (E-1) | - |
| | | Content | - | - | - | - | - | - | - | - | - | - | - | - | 1.00 | - |
| | (F) PVOH | Type | - | - | - | - | - | - | - | - | - | - | - | - | - | (F-1) |
| | | Content | - | - | - | - | - | - | - | - | - | - | - | - | - | 1.30 |
| Composition of adhesive composition in solution state (wet) (% by mass) | (A) Latex | Type | (A-1) | (A-1) | (A-1) | (A-1) | (A-1) | (A-1) | (A-1) | (A-1) | (A-1) | (A-1) | (A-1) | (A-1) | (A-1) | (A-1) |
| | | Content | 39.02 | 38.97 | 38.97 | 38.97 | 34.34 | 32.78 | 32.78 | 35.12 | 39.02 | 39.02 | 39.02 | 39.02 | 38.63 | 38.52 |
| | (B) Polyvalent metal salt | Type | - | (B- 1) | (B-2) | (B-3) | - | - | - | - | - | - | - | - | - | - |
| | | Content | - | 4.48 | 4.48 | 4.48 | - | - | - | - | - | - | - | - | - | |
| | (C) Phenols | Type | - | - | - | - | (C-1-1) | (C-1-2) | (C-1-3) | (C-2-1) | - | - | - | - | - | - |
| | | Content | - | - | . | - | 19.20 | 25.60 | 25.60 | 3.90 | - | - | - | - | - | - |
| | (D) Amides | Type | - | - | - | - | - | - | - | - | (D-1-1) | (D-1-2) | (D-2-2) | (D-2-1) | - | - |
| | | Content | - | - | - | - | - | - | - | - | 2.24 | 10.24 | 1.60 | 3.20 | - | - |
| | (E) Amines | Type | - | - | - | - | - | - | - | - | - | - | - | - | (E-1) | - |
| | | Content | - | - | - | - | - | - | - | - | - | - | - | - | 1.60 | - |
| | (F)PVOH | Type | - | - | - | - | - | - | - | - | - | - | - | - | - | (F-1) |
| | | Content | - | - | - | - | - | - | - | - | - | - | - | - | - | 4.16 |
| | Water | Content | 60.98 | 56.55 | 56.55 | 56.55 | 46.46 | 41.62 | 41.62 | 60.98 | 58.74 | 50.74 | 59.38 | 57.78 | 59.77 | 57.32 |
| Solid content concentration of adhesive composition (% by mass) | | | 16.0 | 16.0 | 16.0 | 16.0 | 16.0 | 16.0 | 16.0 | 16.0 | 16.0 | 16.0 | 16.0 | 16.0 | 16.0 | 16.0 |
| Workability evaluation result | Mechanical stability (%) | | 7.241 | 7.104 | 8.011 | 9.211 | 6.283 | 6.687 | 6.923 | 6.486 | 4.828 | 4.804 | 4.426 | 5.783 | 5.974 | 5.757 |
| | Adhesion to drawing roller | | Extra-large | Large | Extra-large | Extra-large | Large | Large | Large | Large | Large | Large | Large | Large | Large | Large |
| Adhesiveness evaluation result | Adhesive strength (N/piece) | | 3.80 | 4.39 | 3.76 | 3.45 | 4.51 | 3.29 | 5.46 | 3.48 | 6.17 | 4.86 | 5.80 | 5.78 | 6.26 | 3.72 |
| | Adhesion state of rubber | | E | E | E | E | E | E | D | E | D | E | D | D | D | E |

**[Table 3]**

| | Components | | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|---|
| Composition of solid component of adhesive composition (dry) (% by mass) | (A) Latex | Type | (A-1) | (A-1) | (A-1) | (A-1) | (A-1) | (A-1) | (A-1) | (A-1) | (A-1) | (A-1) | (A-1) | (A-1) |
| | | Content | 87.86 | 83.86 | 83.86 | 89.86 | 99.17 | 96.76 | 99.36 | 98.87 | 98.66 | 98.32 | 98.86 | 98.56 |
| | (B) Polyvalent metal salt | Type | (B-1) | (B-1) | (B-1) | (B-1) | (B-1) | (B-1) | (B-1) | (B-1) | (B-1) | (B-1) | (B-1) | (B-1) |
| | | Content | 0.14 | 0.14 | 0.14 | 0.14 | 0.14 | 0.14 | 0.14 | 0.14 | 0.35 | 0.69 | 0.14 | 0.14 |
| | (C) Phenols | Type | (C-1-1) | (C-1-2) | (C-1-3) | (C-2-1) | - | - | - | - | - | - | - | - |
| | | Content | 12.0 | 16.0 | 16.0 | 10.0 | - | - | - | - | - | - | - | - |
| | (D) Amides | Type | - | - | - | - | (D-1-1) | (D-1-2) | (D-2-2) | (D-2-1) | (D-2-1) | (D-2-1) | - | - |
| | | Content | - | - | - | - | 0.70 | 3.10 | 0.50 | 0.99 | 0.99 | 0.99 | - | - |
| | (E) Amines | Type | - | - | - | - | - | - | - | - | - | - | (E-1) | - |
| | | Content | - | - | - | - | - | - | - | - | - | - | 1.00 | - |
| | (F) PVOH | Type | - | - | - | - | - | - | - | - | - | - | - | (F-1) |
| | | Content | - | - | - | - | - | - | - | - | - | - | - | 1.30 |
| Composition of adhesive composition in solution state (wet) (% by mass) | (A) Latex | Type | (A-1) | (A-1) | (A-1) | (A-1) | (A-1) | (A-1) | (A-1) | (A-1) | (A-1) | (A-1) | (A-1) | (A-1) |
| | | Content | 34.29 | 32.73 | 32.73 | 35.07 | 38.97 | 38.97 | 38.97 | 38.97 | 38.89 | 38.75 | 38.58 | 38.50 |
| | (B) Polyvalent metal salt | Type | (B-1) | (B-1) | (B-1) | (B-1) | (B-1) | (B-1) | (B-1) | (B-1) | (B-1) | (B-1) | (B-1) | (B-1) |
| | | Content | 4.48 | 4.48 | 4.48 | 4.48 | 4.48 | 4.48 | 4.48 | 4.48 | 11.20 | 22.40 | 4.48 | 4.48 |
| | (C) Phenols | Type | (C-1-1) | (C-1-2) | (C-1-3) | (C-2-1) | - | - | - | - | - | - | - | - |
| | | Content | 19.20 | 25.60 | 25.60 | 3.90 | - | - | - | - | - | - | - | - |
| | (D) Amides | Type | - | - | - | - | (D-1-1) | (D-1-2) | (D-2-2) | (D-2-1) | (D-2-1) | (D-2-1) | - | - |
| | | Content | - | - | - | - | 2.24 | 10.24 | 1.60 | 3.20 | 3.20 | 3.20 | - | - |
| | (E) Amines | Type | - | - | - | - | - | - | - | - | - | - | (E-1) | - |
| | | Content | - | - | - | - | - | - | - | - | - | - | 1.60 | - |
| | (F) PVOH | Type | - | - | - | - | - | - | - | - | - | - | - | (F-1) |
| | | Content | - | - | - | - | - | - | - | - | - | - | - | 4.16 |
| | Water | Content | 42.03 | 37.19 | 37.19 | 56.55 | 54.31 | 46.31 | 54.95 | 53.35 | 46.71 | 35.65 | 55.34 | 52.90 |
| Solid content concentration of adhesive composition (% by mass) | | | 16.0 | 16.0 | 16.0 | 16.0 | 16.0 | 16.0 | 16.0 | 16.0 | 16.0 | 16.0 | 16.0 | 16.0 |
| Workability evaluation result | Mechanical stability (%) | | 3.597 | 3.887 | 4.111 | 3.285 | 4.101 | 2.774 | 3.743 | 2.814 | 2.863 | 3.075 | 4.308 | 4.469 |
| | Adhesion to drawing roller | | Small | Medium | Medium | Large | Medium | Large | Large | Small | Small | Small | Medium | Medium |
| Adhesiveness evaluation result | Adhesive strength (N/piece) | | 11.62 | 9.77 | 12.09 | 8.92 | 9.67 | 13.46 | 15.20 | 13.17 | 14.73 | 12.01 | 14.45 | 10.04 |
| | Adhesion state of rubber | | C | C | C | C | C | B | B | C | B | C | B | C |

**[Table 4]**

| | Components | | Example 13 | Example 14 | Example 15 | Example 16 | Example 17 | Example 18 | Example 19 | Example 20 | Example 21 | Example 22 | Example 23 | Example 24 |
|---|---|---|---|---|---|---|---|---|---|---|---|---|---|---|
| Composition of solid component of adhesive composition (dry) (% by mass) | (A) Latex | Type | (A-1) | (A-1) | (A-1) | (A-1) | (A-1) | (A-1) | (A-1) | (A-1) | (A-1) | (A-1) | (A-1) | (A-1) |
| | | Content | 87.25 | 87.42 | 96.89 | 86.99 | 77.09 | 86.14 | 82.89 | 85.84 | 86.99 | 86.99 | 86.86 | 86.56 |
| | (B) Polyvalent metal salt | Type | (B-1) | (B-1) | (B-1) | (B-1) | (B-1) | (B-1) | (B-1) | (B-1) | (B-2) | (B-3) | (B-1) | (B-1) |
| | | Content | 0.14 | 0.14 | 0.14 | 0.14 | 0.14 | 0.14 | 0.13 | 1.29 | 0.14 | 0.14 | 0.14 | 0.14 |
| | (C) Phenols | Type | (C-1-1) | (C-1-1) | (C-1-1) | (C-1-1) | (C-1-1) | (C-1-1) | (C-1-1) | (C-1-1) | (C-1-1) | (C-1-1) | (C-1-1) | (C-1-1) |
| | | Content | 11.9 | 11.9 | 2.0 | 11.9 | 21.8 | 11.8 | 11.3 | 11.9 | 11.9 | 11.9 | 12.0 | 12.0 |
| | (D) Amides | Type | (D-1-1) | (D-2-2) | (D-2-1) | (D-2-1) | (D-2-1) | (D-2-1) | (D-2-1) | (D-2-1) | (D-2-1) | (D-2-1) | - | - |
| | | Content | 0.70 | 0.50 | 0.99 | 0.99 | 0.99 | 1.96 | 5.66 | 0.99 | 0.99 | 0.99 | - | - |
| | (E) Amines | Type | - | - | - | - | - | - | - | - | - | - | (E-1) | - |
| | | Content | - | - | - | - | - | - | - | - | - | - | 1.00 | - |
| | (F) PVOH | Type | | | | | | - | | | | | | (F-1) |
| | | Content | - | - | - | - | - | - | - | - | - | - | - | 1.30 |
| Composition of adhesive composition in solution state (wet) (% by mass) | (A) Latex | Type | (A-1) | (A-1) | (A-1) | (A-1) | (A-1) | (A-1) | (A-1) | (A-1) | (A-1) | (A-1) | (A-1) | (A-1) |
| | | Content | 34.29 | 34.29 | 38.19 | 34.29 | 30.38 | 34.29 | 34.29 | 33.83 | 34.29 | 34.29 | 33.90 | 33.78 |
| | (B) Polyvalent metal salt | Type | (B-1) | (B-1) | (B-1) | (B-1) | (B-1) | (B-1) | (B-1) | (B-1) | (B-2) | (B-3) | (B-1) | (B-1) |
| | | Content | 4.48 | 4.48 | 4.48 | 4.48 | 4.48 | 4.48 | 4.48 | 41.60 | 4.48 | 4.48 | 4.48 | 4.48 |
| | (C) Phenols | Type | (C-1-1) | (C-1-1) | (C-1-1) | (C-1-1) | (C-1-1) | (C-1-1) | (C-1-1) | (C-1-1) | (C-1-1) | (C-1-1) | (C-1-1) | (C-1-1) |
| | | Content | 19.20 | 19.20 | 3.20 | 19.20 | 35.20 | 19.20 | 19.20 | 19.20 | 19.20 | 19.20 | 19.20 | 19.20 |
| | (D) Amides | Type | (D-1-1) | (D-2-2) | (D-2-1) | (D-2-1) | (D-2-1) | (D-2-1) | (D-2-1) | (D-2-1) | (D-2-1) | (D-2-1) | - | - |
| | | Content | 2.24 | 1.60 | 3.20 | 3.20 | 3.20 | 6.40 | 19.20 | 3.20 | 3.20 | 3.20 | - | - |
| | (E) Amines | Type | - | - | - | - | - | - | - | - | - | - | (E-1) | - |
| | | Content | - | - | - | - | - | - | - | - | - | - | 1.60 | - |
| | (F) PVOH | Type | - | - | - | - | - | - | - | - | - | - | - | (F-1) |
| | | Content | - | - | - | - | - | - | - | - | - | - | - | 4.16 |
| | Water | Content | 39.79 | 40.43 | 50.93 | 38.83 | 26.74 | 35.63 | 22.83 | 2.17 | 38.83 | 38.83 | 40.82 | 38.38 |
| Solid content concentration of adhesive composition (% by mass) | | | 16.0 | 16.0 | 16.0 | 16.0 | 16.0 | 16.0 | 16.0 | 16.0 | 16.0 | 16.0 | 16.0 | 16.0 |
| Workability evaluation result | Mechanical stability (%) | | 3.472 | 1.998 | 2.328 | 3.588 | 4.099 | 2.264 | 1.542 | 3.677 | 3.164 | 4.186 | 3.186 | 2.742 |
| | Adhesion to drawing roller | | Small | Small | Small | Medium | Medium | Small | Small | Medium | Small | Medium | Small | Small |
| Adhesiveness evaluation result | Adhesive strength (N/piece) | | 12.52 | 17.51 | 16.58 | 18.74 | 10.76 | 17.74 | 15.76 | 17.44 | 15.29 | 13.09 | 16.95 | 16.78 |
| | Adhesion state of rubber | | C | B | B | B | C | B | B | B | B | C | B | B |

**[Table 5]**

| | Components | | Example 25 | Example 26 | Example 27 | Example 28 | Example 29 |
|---|---|---|---|---|---|---|---|
| Composition of solid component of adhesive composition (dry) (% by mass) | (A) Latex | Type | (A-1) | (A-1) | (A-1) | (A-1) | (A-1) |
| | | Content | 62.55 | 85.50 | 62.24 | 62.24 | 61.86 |
| | (B) Polyvalent metal salt | Type | (B-1) | (B-1) | (B-1) | (B-1) | (B-1) |
| | | Content | 0.14 | 0.14 | 0.14 | 0.14 | 0.14 |
| | (C) Phenols | Type | (C-1-1) | (C-1-1) | (C-1-1) | (C-1-1) | (C-1-1) |
| | | Content | 11.9 | 11.9 | 11.9 | 11.9 | 12.0 |
| | (D) Amides | Type | (D-2-2) | (D-2-1) | (D-2-1) | (D-2-1) | - |
| | | Content | 0.50 | 0.99 | 0.99 | 0.99 | - |
| | (E) Amines | Type | - | - | - | - | (E-1) |
| | | Content | - | - | - | - | 1.00 |
| | (F) PVOH | Type | - | - | - | - | - |
| | | Content | - | - | - | - | - |
| | (G) Epoxies | Type | - | (G-1) | - | - | - |
| | | Content | - | 1.49 | - | - | - |
| | (H) Isocyanates | Type | (H-2) | - | (H-1) | (H-2) | (H-2) |
| | | Content | 24.88 | - | 24.75 | 24.75 | 25.00 |
| Composition of adhesive composition in solution state (wet) (% by mass) | (A) Latex | Type | (A-1) | (A-1) | (A-1) | (A-1) | (A-1) |
| | | Content | 24.53 | 33.70 | 24.53 | 24.53 | 24.14 |
| | (B) Polyvalent metal salt | Type | (B-1) | (B-1) | (B-1) | (B-1) | (B-1) |
| | | Content | 4.48 | 4.48 | 4.48 | 4.48 | 4.48 |
| | (C) Phenols | Type | (C-1-1) | (C-1-1) | (C-1-1) | (C-1-1) | (C-1-1) |
| | | Content | 19.20 | 19.20 | 19.20 | 19.20 | 19.20 |
| | (D) Amides | Type | (D-2-2) | (D-2-1) | (D-2-1) | (D-2-1) | - |
| | | Content | 1.60 | 3.20 | 3.20 | 3.20 | - |
| | (E) Amines | Type | - | - | - | - | (E-1) |
| | | Content | - | - | - | - | 1.60 |
| | (F) PVOH | Type | - | - | - | - | - |
| | | Content | - | - | - | - | - |
| | (G) Epoxies | Type | - | (G-1) | - | - | - |
| | | Content | - | 2.40 | - | - | - |
| | (H) Isocyanates | Type | (H-2) | - | (H-1) | (H-2) | (H-2) |
| | | Content | 12.90 | - | 10.00 | 12.90 | 12.90 |
| | Water | Content | 37.29 | 37.02 | 38.59 | 35.69 | 37.68 |
| Solid content concentration of adhesive composition (% by mass) | | | 16.0 | 16.0 | 16.0 | 16.0 | 16.0 |
| Workability evaluation result | Mechanical stability (%) | | 1.894 | 3.504 | 4.010 | 2.702 | 2.516 |
| | Adhesion to drawing roller | | Small | Medium | Medium | Small | Small |
| Adhesiveness evaluation result | Adhesive strength (N/piece) | | 20.46 | 21.89 | 16.63 | 22.05 | 20.61 |
| | Adhesion state of rubber | | A | A | B | A+ | A |

(A-1): rubber latex having unsaturated diene, vinylpyridine-styrene-butadiene copolymer latex synthesized with the above method, solid content concentration 41% by mass
(B-1): polyvalent metal salt (copper compound), product name "Copper (II) gluconate" (CAS Number: 527-09-3, purity 97% or more) manufactured by Tokyo Chemical Industry Co., Ltd. (TCI), solid powder
(B-2): polyvalent metal salt (copper compound), product name "Copper (II) acetate monohydrate" (CAS Number: 6046-93-1, purity 99% or more) manufactured by KANTO CHEMICAL CO.,INC., solid powder
(B-3): polyvalent metal salt (iron compound), product name "Iron (II) chloride tetrahydrate" (CAS Number: 13478-10-9, purity 98% or more) manufactured by NACALAI TESQUE, INC., solid powder
(C-1-1): polyphenol (lignin sulfonate), product name "Lignin (alkali)" (CAS Number: 8061-51-6) manufactured by Tokyo Chemical Industry Co., Ltd. (TCI), partially desulfonated lignin sulfonate with reduced degree of sulfonation, solid powder
(C-1-2): polyphenol (kraft lignin), product name "Lignin, alkali" (CAS Number: 8068-05-1) manufactured by Sigma-Aldrich Co. LLC, kraft lignin, solid powder
(C-1-3): polyphenol (condensed tannin), product name "Mimosa" manufactured by Kawamura Corporation, vegetable tannin obtained from mimosa, tannin content 72 ± 2% (test result value), solid powder
(C-2-1): polycyclic aromatic hydrocarbon, β-naphthalenesulfonic acid formaldehyde condensate sodium salt, product name "DEMOL RN-L" (CAS Number: 9084-06-4) manufactured by Kao Corporation, weight average molecular weight by GPC = approximately 2,900, solid content concentration 41% [in which sodium content was approximately 3.9%], liquid
(D-1-1): hydrolyzed polypeptide derived from milk, product name "Promis HYDOROMILK" manufactured by SEIWA KASEI CO., LTD, solid content concentration = 30% by mass, aqueous solution
   (D-1-2): pigskin gelatin, product name "High Grade Gelatin M.W. 8000 ± 2000" (CAS Number: 9015-54-7) manufactured by FUJIFILM Wako Pure Chemical Corporation, solid content powder
   (D-2-1): nonionic polyacrylamide, product name "DS4399" (viscosity at 25°C = approximately 6000 mPa·s, specific gravity = 1.06) manufactured by SEIKO PMC CORPORATION, solid content concentration 20%, aqueous solution
   (D-2-2): amphoteric polyacrylamide, product name "DS4433" (viscosity at 25°C = approximately 7000 mPa·s, specific gravity = 1.07) manufactured by SEIKO PMC CORPORATION, solid content concentration 20%, aqueous solution
(E-1): amine compound (polyethyleneimine), reagent name "Polyethyleneimine average molecular weight 600" (CAS Number: 9002-98-6, epoxy equivalent 173 g/eq.) manufactured by Wako Pure Chemical Corporation, liquid
(F-1): polyvinyl alcohol (acetoacetyl group-modified polyvinyl alcohol), product name "Gohsenx Z-410" (purity 93.5% or more) manufactured by Mitsubishi Chemical Corporation, degree of saponification 97.5 mol% to 99.5 mol%, viscosity of 4% aqueous solution at 20°C = 43.5 mPa·s to 58.5 mPa·s (catalog value), solid powder
(G-1): epoxide compound, sorbitol/polyglycidyl ether, product name "DENACOL EX-614B" (CAS Number: 68412-01-1) manufactured by Nagase ChemteX Corporation, viscosity at 20°C = approximately 5000 mPa·s (catalog value), liquid
(H-1): aqueous compound having a (thermal dissociative blocked) isocyanate group, product name "DM-6400" (blocking agent thermal dissociation temperature: approximately 130°C, solid content concentration 40 mass%) manufactured by Meisei Chemical Works, Ltd., methyl ethyl ketoxime block-diphenylmethane diisocyanate compound, water dispersion
(H-2): aqueous compound having a (thermal dissociative blocked) isocyanate group, product name: "ELASTRON BN77" (blocking agent thermal dissociation temperature: approximately 160°C, pH 8.0, solid content concentration: 31% by mass) manufactured by DKS Co. Ltd., aqueous dispersion

According to Tables 3 to 5, it is understood that the adhesive composition of each Example has good workability and good adhesiveness between an organic fiber and a coated rubber composition.

### INDUSTRIAL APPLICABILITY

According to the present disclosure, it is possible to provide to an adhesive composition that can ensure desired adhesiveness without using resorcin and does not impair workability in use, as well as an organic fiber material, a rubber article, an organic fiber-rubber composite, and a tire using the adhesive composition. Therefore, the present disclosure can be used in the industrial fields of manufacturing rubber articles such as tires.

### REFERENCE SIGNS LIST

- 1:: organic fiber cord
- 2:: adhesive composition
- 3:: immersion bathtub (dipping tub)
- 4:: organic fiber cord coated with the adhesive composition
- 5:: drawing roll
- 6:: drying zone
- 7:: hot zone
- 8:: normalizing zone
- 31:: organic fiber-rubber composite
- 32:: adhesive layer of adhesive composition
- 33:: coated rubber composition

## Claims

1. An adhesive composition, comprising:
(A) a rubber latex having unsaturated diene, and
(B) a polyvalent metal salt, and
further comprising at least one component selected from the group consisting of the following (C) to (F):
(C) an aqueous component having a plurality of phenolic hydroxy groups in molecule,
(D) a water-soluble component containing an amide bond structure,
(E) an amine compound, and
(F) polyvinyl alcohol.

2. The adhesive composition according to claim 1, further comprising at least one component selected from the group consisting of the following (G) to (H):
(G) an epoxide compound, and
(H) an aqueous compound having a (thermal dissociative blocked) isocyanate group.

3. The adhesive composition according to claim 1 or 2, wherein the (B) polyvalent metal salt is a divalent or higher metal ion salt.

4. The adhesive composition according to any one of claims 1 to 3, wherein the (B) polyvalent metal salt is water-soluble and is a metal salt of tetracoordinated or hexacoordinated polyvalent metal ion.

5. The adhesive composition according to any one of claims 1 to 4, wherein the (B) polyvalent metal salt is a metal salt comprising at least one kind of metal selected from the group consisting of iron and copper.

6. The adhesive composition according to any one of claims 1 to 5, wherein the (C) aqueous component having a plurality of phenolic hydroxy groups in molecule is a plant-derived component having a plurality of phenolic hydroxy groups in molecule.

7. The adhesive composition according to claim 6, wherein the (C) aqueous component having a plurality of phenolic hydroxy groups in molecule is lignin, tannin, tannic acid, flavonoid, or a derivative thereof.

8. The adhesive composition according to any one of claims 1 to 5, wherein the (C) aqueous component having a plurality of phenolic hydroxy groups in molecule is an aqueous compound containing formaldehyde and aromatic hydrocarbons having a phenolic hydroxyl group in molecule.

9. The adhesive composition according to claim 8, wherein the (C) aqueous component having a plurality of phenolic hydroxy groups in molecule is an aqueous compound containing formaldehyde and polycyclic aromatic hydrocarbons having a phenolic hydroxyl group in molecule.

10. The adhesive composition according to any one of claims 1 to 9, wherein the (D) water-soluble component containing an amide bond structure is a water-soluble component containing a peptide structure, or a water-soluble compound containing an acrylamide structure.

11. The adhesive composition according to claim 10, wherein the (D) water-soluble component containing an amide bond structure is at least one water-soluble component selected from the group consisting of protein and polypeptide obtained by hydrolyzing protein.

12. The adhesive composition according to claim 11, wherein the (D) water-soluble component containing an amide bond structure is at least one kind of protein selected from the group consisting of casein and gelatin.

13. The adhesive composition according to claim 11, wherein the (D) water-soluble component containing an amide bond structure is polypeptide obtained by hydrolyzing protein derived from wool, milk, beans, silk, fish scales, or skin.

14. The adhesive composition according to claim 10, wherein the (D) water-soluble component containing an amide bond structure is an aqueous compound of polyacrylamide or a modified product thereof.

15. The adhesive composition according to claim 14, wherein the (D) water-soluble component containing an amide bond structure is amphoteric polyacrylamide.

16. The adhesive composition according to any one of claims 1 to 15, wherein the (E) amine compound is a polyfunctional amine compound having two or more primary to tertiary amino groups.

17. The adhesive composition according to any one of claims 1 to 16, wherein the (F) polyvinyl alcohol has a degree of saponification of 80 mol% or more.

18. The adhesive composition according to any one of claims 1 to 17, wherein the (F) polyvinyl alcohol is acetoacetyl group-modified polyvinyl alcohol.

19. The adhesive composition according to any one of claims 2 to 18, wherein the (G) epoxide compound has two or more epoxy groups in one molecule.

20. The adhesive composition according to any one of claims 2 to 19, wherein the (G) epoxide compound is a reaction product of polyhydric alcohol and epichlorohydrin.

21. The adhesive composition according to any one of claims 2 to 20, wherein the (H) aqueous compound having a (thermal dissociative blocked) isocyanate group is (H-1) a water-dispersible (thermal dissociative blocked) isocyanate compound that contains an addition product of polyisocyanate having an aromatic ring and a blocking agent having at least one active hydrogen group.

22. The adhesive composition according to claim 21, wherein the (H-1) water-dispersible (thermal dissociative blocked) isocyanate compound that contains an addition product of polyisocyanate having an aromatic ring and a blocking agent having at least one active hydrogen group is a block body of methylene diphenyl diisocyanate.

23. The adhesive composition according to any one of claims 2 to 20, wherein the (H) aqueous compound having a (thermal dissociative blocked) isocyanate group is (H-2) an aqueous urethane compound having a (thermal dissociative blocked) isocyanate group.

24. The adhesive composition according to claim 23, wherein the (H-2) aqueous urethane compound having a (thermal dissociative blocked) isocyanate group is a reaction product obtained by mixing (α), (β), (γ) and (δ) and reacting them, wherein
(α) is an organic polyisocyanate compound having 3 or more and 5 or less functional groups and having a number average molecular weight of 2,000 or less,
(β) is a compound having 2 or more and 4 or less active hydrogen groups and having a number average molecular weight of 5,000 or less,
(γ) is a thermal dissociative blocking agent, and
(δ) is a compound having at least one active hydrogen group and at least one anionic, cationic, or nonionic hydrophilic group, and
(α), (β), (γ) and (δ) are mixed so that
a mixing ratio of (α) is 40% by mass or more and 85% by mass or less,
a mixing ratio of (β) is 5% by mass or more and 35% by mass or less,
a mixing ratio of (γ) is 5% by mass or more and 35% by mass or less, and
a mixing ratio of (δ) is 5% by mass or more and 35% by mass or less, with respect to the total amount of (α), (β), (γ) and (δ), and
when a molecular weight of isocyanate group (-NCO) is 42, a composition ratio of (thermal dissociative blocked) isocyanate group in the reaction product is 0.5% by mass or more and 11% by mass or less.

25. The adhesive composition according to claim 23, wherein the (H-2) aqueous urethane compound having a (thermal dissociative blocked) isocyanate group is represented by the following general formula (1): 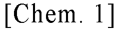 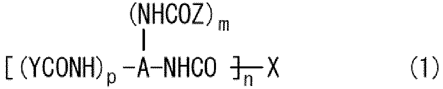 wherein
A is a residue of an organic polyisocyanate compound from which an active hydrogen group has been eliminated,
X is a residue of a polyol compound having 2 or more and 4 or less hydroxyl groups and having a number average molecular weight of 5,000 or less from which an active hydrogen group has been eliminated,
Y is a residue of a thermal dissociative blocking agent from which an active hydrogen group has been eliminated,
Z is a residue of a compound having at least one active hydrogen group and at least one salt-producing group or hydrophilic polyether chain, from which an active hydrogen group has been eliminated,
n is an integer of 2 or more and 4 or less, and
p + m is an integer of 2 or more and 4 or less, where m ≥ 0.25.

26. The adhesive composition according to any one of claims 1 to 25, comprising no resorcin.

27. The adhesive composition according to any one of claims 1 to 26, which is used for adhesion to rubber.

28. The adhesive composition according to any one of claims 1 to 26, which is used for adhesion to an organic fiber.

29. The adhesive composition according to any one of claims 1 to 28, which is used for adhering rubber to an organic fiber.

30. An organic fiber material, comprising an organic fiber and an adhesive layer coating a surface of the organic fiber, wherein
the adhesive layer is made of the adhesive composition according to any one of claims 1 to 29.

31. The organic fiber material according to claim 30, wherein the organic fiber is an organic fiber cord obtained by twisting a plurality of filaments.

32. The organic fiber material according to claim 31, wherein the organic fiber cord is made by first twisting and second twisting, the cord obtained by twisting has a fiber thickness of 100 dtex to 5000 dtex, and the number of twists is 10 times/10 cm to 50 times/10 cm for first twists and 10 times/10 cm to 50 times/10 cm for second twists.

33. The organic fiber material according to claim 31 or 32, wherein the adhesive layer is 0.5% by mass to 6.0% by mass of the mass of the organic fiber cord in dry mass.

34. The organic fiber material according to any one of claims 30 to 33, wherein the organic fiber is made of nylon resin.

35. A rubber article, which is reinforced by the organic fiber material according to any one of claims 30 to 34.

36. An organic fiber-rubber composite, which is a composite of an organic fiber and rubber, wherein the organic fiber is coated with the adhesive composition according to any one of claims 1 to 29.

37. A tire, using the organic fiber-rubber composite according to claim 36.
